(19) Europäisches Patentamt
European Patent Office
Office européen des brevets

(11) **EP 2 022 549 A1**

(12) **EUROPEAN PATENT APPLICATION**
published in accordance with Art. 153(4) EPC

(43) Date of publication:
**11.02.2009 Bulletin 2009/07**

(51) Int Cl.:
***A63F 13/00*** *(2006.01)*

(21) Application number: **07714342.8**

(22) Date of filing: **16.02.2007**

(86) International application number:
**PCT/JP2007/052812**

(87) International publication number:
**WO 2007/135791 (29.11.2007 Gazette 2007/48)**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(30) Priority: **19.05.2006 JP 2006139864**

(71) Applicant: **Konami Digital Entertainment Co., Ltd. Tokyo 107-8324 (JP)**

(72) Inventors:
• **ISHIDA, Hiroki**
  **Tokyo 1078324 (JP)**
• **SAKAI, Toyokazu**
  **Tokyo 1078324 (JP)**

(74) Representative: **Driver, Virginia Rozanne**
  **Page White & Farrer**
  **Bedford House**
  **John Street**
  **London WC1N 2BF (GB)**

(54) **DATA COMPUTING UNIT FOR MUSIC GAME, DATA COMPUTING PROGRAM FOR MUSIC GAME, AND DATA COMPUTING METHOD FOR MUSIC GAME**

(57)    A difficulty of each of change patterns of neck buttons R, G, and B is indicated by a change point, which is stored in association with the change pattern. Using this data, the change level of an operation pattern of the neck buttons in operation sequence data is digitized. The digitized change level of the operation pattern is displayed on a song selection screen as a feature of each operation sequence data. Such an absolute index indicating a feature of the operation sequence data enables a player to rely on the displayed index, which facilitates the player to select operation sequence data suitable for the player's skill or taste.

## FIG. 12

232

| BEFORE/ AFTER | R—— | —G— | RG— | ——B | R—B | —GB | RGB | ——— |
|---|---|---|---|---|---|---|---|---|
| R—— | 0 | 50 | 95 | 55 | 105 | 125 | 130 | 100 |
| —G— | 55 | 0 | 95 | 60 | 150 | 105 | 135 | 110 |
| RG— | 80 | 85 | 0 | 105 | 145 | 130 | 100 | 105 |
| ——B | 60 | 65 | 130 | 0 | 115 | 110 | 130 | 110 |
| R—B | 110 | 140 | 145 | 100 | 0 | 140 | 110 | 105 |
| —GB | 115 | 110 | 140 | 110 | 145 | 0 | 105 | 100 |
| RGB | 135 | 140 | 125 | 140 | 130 | 125 | 0 | 90 |
| ——— | 50 | 55 | 90 | 50 | 110 | 125 | 135 | 0 |

EP 2 022 549 A1

**Description**

Technical Field

The present invention relates to a music game for which a player performs operations with respect to progression of a music song.

Background Art

Conventionally, various apparatuses have been proposed as a music game device. For example, a game apparatus is known in which a sound is outputted when timings to play a song stored in the apparatus are instructed on a monitor and an operation member is operated at the timings as instructed. The instruction of play timings is issued for example on a monitor, by scrolling instruction marks which individually correspond to a plurality of operation members toward a timing line to put an instruction mark on the timing line. The operation members include a guitar-shaped controller, a drum-shaped controller, a console-shaped button, and a foot panel. In such music game devices, basically, a game score is computed based on the deviation between the timing a player operated an instructed operation member by and the instruction timing.

Disclosure of Invention

For the songs stored in the above described music game devices, an operation sequence is generated in accordance with each of the songs. The operation sequence specifies an operation member and the timing to operate the member. The operation sequence which specifies more various operation members or more complicated timings to operate the members increases the difficulty level of a game. The operation sequence is generated in accordance with a song to be performed, thereby a change of the song to be performed results in a change of the operation sequence. Thus, in order to let a player to select an operation sequence, a player is generally allowed to select a song to be performed. In the case where a plurality of operation sequences of various difficulty levels are assigned to one song to be performed, in some music game devices, a player has a right to select one of the operation sequences. In such music game devices, when an M number of songs are stored with an N number of operation sequences being generated for each song, the M x N operation sequences are totally available.

For a player of a music game, it is fun to select a song to be performed in the game. However, half the fun is gone for the player when the player does not like the song or operation sequence. Therefore, in selecting a song or operation sequence, a player wants to select the song or operation sequence which has the features (including a difficulty level) suitable for the player's taste. Among the features, in a music game device provided with a plurality of operation members, the way to change the operation members is the feature that attracts the interest of players because the dynamism of a game depends on how many and how frequently the operation members are used in an operation sequence.

Conventionally, the features of each operation sequence are determined subjectively by producers of the music game device. Specifically, a plurality of staff persons play a game in accordance with each operation sequence, and evaluate the features based on the obtained results. Then, based on the average scores of the evaluation obtained by each of the staff persons, the average scores for each of the operation sequences are adjusted for balance, so that the value representing the feature of each operation sequence is determined.

Technical Problem

In the above method, a plurality of staff persons play a game serially to evaluate the features of each of the M x N operation sequences, which requires a tremendous time commitment. In addition, since the features are determined subjectively and individually by the staff persons, the criterion of the determination may be variable. Moreover, the change of the time for evaluation causes changes of skills, temporal conditions and the like of the staff persons. As a result, even if the same staff person evaluates the same operation sequence, the resulting evaluation may be possibly different depending on the time and situation.

One object of the present invention is to provide a fixed evaluation criterion for features of an operation sequence. Another object of the present invention is to digitize the feature of a change of operation members, among the features of the operation sequence. A further object of the present invention is to reduce the labor of the producer side which is required to evaluate the features of operation sequences.

Technical Solution

In order to solve the above problems, a first aspect of the present invention provides a data computation apparatus for music game for computing data which is used in a music game. The apparatus has the following means:

- operation sequence storing means for storing an operation sequence in association with a song to be performed, the operation sequence setting time information of the song in correspondence with a predetermined plurality of operation members to be operated at the time information;
- change point storing means for storing a predetermined change point for each of change patterns of the operation members;
- change determining means for determining all of the change patterns of the operation members included in each operation sequence; and
- change computing means for digitizing and storing a change level of the operation members for each operation sequence based on the change patterns determined by the change determining means and the corresponding change points.

The more operation members to be operated at operation timings are changed, the higher difficulty level the operation sequence has. Thus, in a data computation apparatus for music game of the present invention, a change level of operation members, that is, a difficulty level to change operation members is digitized and stored in association with an operation sequence. The stored change level value is delivered to music game devices via a network, so as to be used in executing a music game. Also, the apparatus of the present invention may be provided to a music game device, so that the computation of a change level of operation members is enabled on the music game device.

In the present invention, a change pattern of operation members means a change of operation member(s) operated at one time, that is, a change of combinations of one or a plurality of operation members operated at one time. For example, when the operation members are two buttons R and G, there are three combinations of the operation members operated at one time: "R", "G", and "R · G". And there are six change patterns of the combinations of the operation members: "R → G", "R → R · G", "G → R · G", "G → R", "R · G → R", and "R · G → G".

In the present invention, a difficulty level of each change pattern is represented by a change point, which is stored in association with the change pattern. This allows a change level of operation members in an operation sequence to be digitized which has never been done before. Moreover, this allows a digitized change level of operation members to be displayed on a music game device as a specific index which shows the feature of each operation sequence. As a result, a player of a music game can select an operation sequence suitable for his/her skill or taste based on the digitized change levels of operation members.

A second aspect of the present invention, in the first aspect, provides the data computation apparatus for music game in which the change computing means reads each of the change points corresponding to the change patterns of the operation members in each operation sequence out of the change point storing means, and computes the sum total of the read change points, so as to calculate a change level of the operation members of each operation sequence.

Because different change patterns of operation members have different difficulty levels, a change point for each of the change patterns is determined in advance. Here, when change points are determined so that a more difficult changing has a higher change point, the higher sum total of the change points an operation sequence has, the higher change level of operation members the operation sequence has.

A third aspect of the present invention, in the second aspect, provides the data computation apparatus for music game which further includes entire-period coefficient storing means for storing a coefficient according to the time period at a change of the operation members. In the apparatus, the change computing means weights the change levels of the operation members of each operation sequence by computing the sum total of the values which are obtained by multiplying the coefficients according to the time periods at the changes in change patterns of operation members included in each operation sequence by the change point of each change pattern.

A change level of operation members of an operation sequence depends on the change patterns included in the operation sequence and the speed of the change as well. Thus, the time period for a change of operation members is reflected in a change level of operation members of each operation sequence. For example, for the shorter time period for a change of operation members in a change pattern, a larger coefficient is used in a multiplication by a change point. This increases the sum total of weighted change points for an operation sequence which has shorter time periods for changes of operation members as a whole and includes more difficult change patterns. As a result, an operation sequence having a higher sum total value provides a fun with a higher level of changes of operation members.

A fourth aspect of the present invention, in the first aspect, provides the data computation apparatus for music game in which the change determining means further determines, in each operation sequence, the change pattern of operation members within the most frequent change period which is the period of time having the highest number of changes of operation members in a predetermined period of time. In the apparatus, the change computing means reads the change point for each change pattern of operation members within the most frequent change period out of the change point storing means, and computes the sum total of the read change points, so as to calculate a change level of the operation members of each operation sequence.

The difficulty levels of the change patterns within a period of time in which changes of operation members are most frequently performed are digitized. The higher total change point of the change patterns of operation members during the time of period, the higher difficulty level of changes of operation members an operation sequence has at the part thereof in which the operation members are most frequently changed.

A fifth aspect of the present invention, in the fourth aspect, provides the data computation apparatus for music game which further includes the most frequent change period coefficient storing means for storing a coefficient according to a time period at a change of operation members. In the apparatus, the change computing means weights the change levels of operation members of each operation sequence by computing the sum total of the values which are obtained by multiplying the coefficients according to the time periods at the changes in the change patterns of the operation members in the most frequent change period by the change point of each change pattern.

A difficulty of a change of operation members depends on the change patterns and the speed of the change as well. Thus, based on the time periods at changes of operation members, the changes of operation members included in each operation sequence are digitized. For example, for a shorter time period at a change pattern, a larger coefficient is used in a multiplication by a change point. This increases the sum total of weighted change points for an operation sequence which has shorter time periods at changes of operation members and includes more difficult change patterns. As a result, an operation sequence having a higher sum total value provides a fun with a higher level of changes of operation members.

A sixth aspect of the present invention provides the data computation apparatus for music game which further includes difficulty level means for computing and storing a difficulty level of each operation sequence based on the sum total value of the change points of the change patterns of the operation members in each operation sequence according to the second aspect and/or the sum total value of the change points of the change patterns of the operation members within the most frequent change period in each operation sequence according to the fourth aspect.

For example, a difficulty level can be computed by weighting and adding the sum total of change points obtained from all of the change patterns included in an operation sequence and the sum total of change points obtained from the change patterns within the most frequent change period. Such a use of the sum totals of change points enables a difficulty level in consideration with the difficulty of changes of operation members included in an operation sequence to be obtained by computations. A difficulty level obtained as described above has an improved reliability because of the fixed computation criterion.

A seventh aspect of the present invention provides the data computation apparatus for music game which further includes difficulty level means for computing and storing a difficulty level of each operation sequence based on the sum total value of the weighted change points of the change patterns of the operation members in each operation sequence according to the third aspect and the sum total value of the weighted change points of the change patterns of the operation members within the most frequent change period in each operation sequence according to the fifth aspect.

Such a use of the sum totals of change points enables a difficulty level in consideration with the speeds of changes of operation members to be obtained by computations. In addition, the obtained difficulty level has an improved reliability because of the fixed computation criterion

An eighth aspect of the present invention, in the first aspect, provides the data computation apparatus for music game which further includes a monitor and change displaying means. The monitor outputs operation timings to the plurality of operation members based on the operation sequence. The change displaying means displays a change level of operation members digitized by the change computing means.

The monitor may display a change level as it is or as a value within a predetermined range which is obtained by normalizing the change level. Alternatively, the change level may be displayed as a level within a predetermined range using a graph or chart, instead of a value.

A ninth aspect of the present invention provides a data computation program for music game which is executed by a computer that computes data used in a music game. The program causes the computer to function as the following means:

1) operation sequence storing means for storing an operation sequence which sets time information of a song in correspondence with a predetermined plurality of operation members to be operated at the time information, in association with the song;
2) change point storing means for storing a predetermined change point for each change pattern of the operation members;
3) change determining means for determining all of the change patterns of the operation members in each operation sequence; and
4) change computing means for digitizing and storing a change level of the operation members for each operation sequence based on the change patterns determined by the change determining means and the corresponding change points.

The program causes the computer to function as a preparation apparatus for music game of the first aspect, and has the effects similar to those of the first aspect.

A tenth aspect of the present invention provides a data computation method for music game which is implemented by a computer that computes data used in a music game. The method includes the following steps:

1) an operation sequence storing step for storing an operation sequence which sets time information of a song in correspondence with a predetermined plurality of operation members to be operated at the time information, in association with the song;

2) a change point storing step for storing a predetermined change point for each change pattern of the operation members;

3) a change determining step for determining all of the change patterns of the operation members in each operation sequence; and

4) a change computing step for digitizing and storing a change level of the operation members for each operation sequence based on the change patterns determined by the change determining step and the corresponding change points.

The method has the effects similar to those of the first aspect.

The present invention enables the digitization of the entire or a part of changes of operation members in an operation sequence by digitizing change patterns of operation members included in the operation sequence. This allows operation sequences to be evaluated based on a fixed evaluation criterion, and also reduces the labor of the producer side which is required to evaluate the features of operation sequences.

Brief Description of Drawings

[Fig. 1]

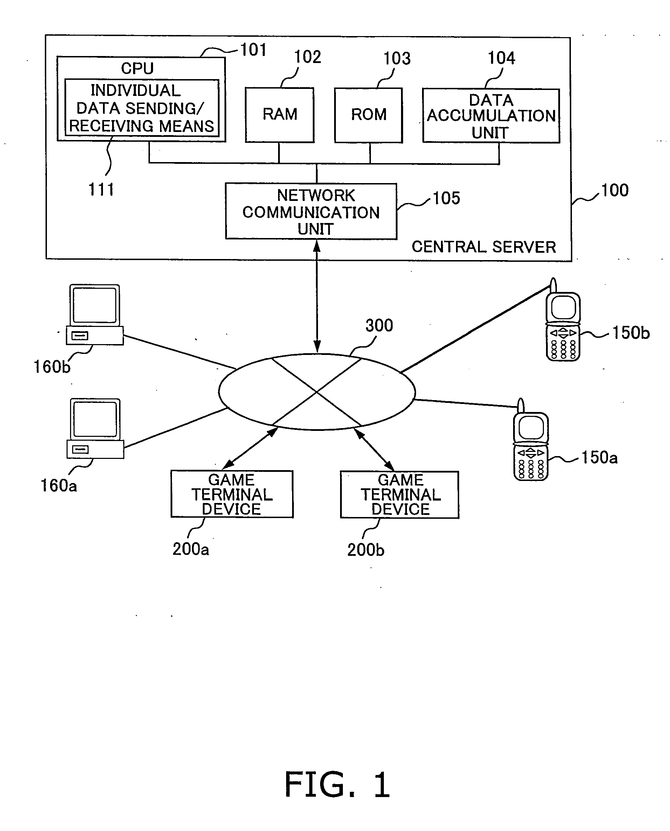

Fig. 1 is a view illustrating the whole configuration of a game system according to a first embodiment.
[Fig. 2]

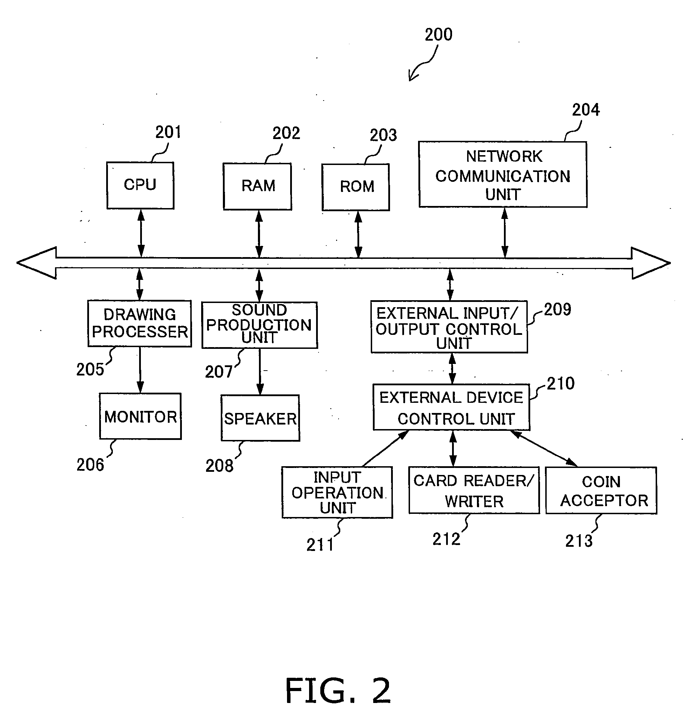

Fig. 2 is a view showing the configuration of a game terminal device.
[Fig. 3]

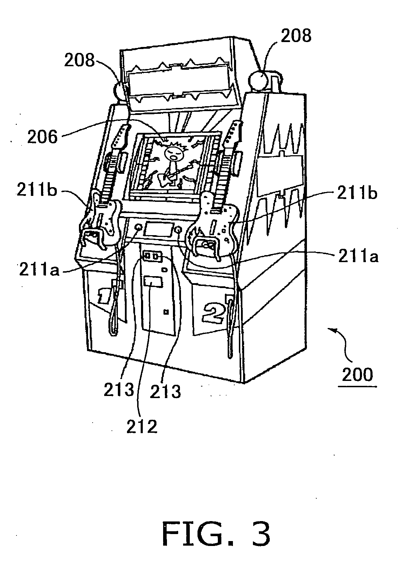

Fig. 3 is a perspective view showing the outline of a music game device which is an example of a game terminal device.
[Fig. 4]

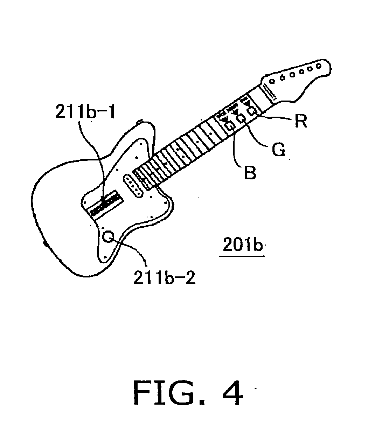

Fig. 4 is an enlarged view of a guitar controller.
[Fig. 5]

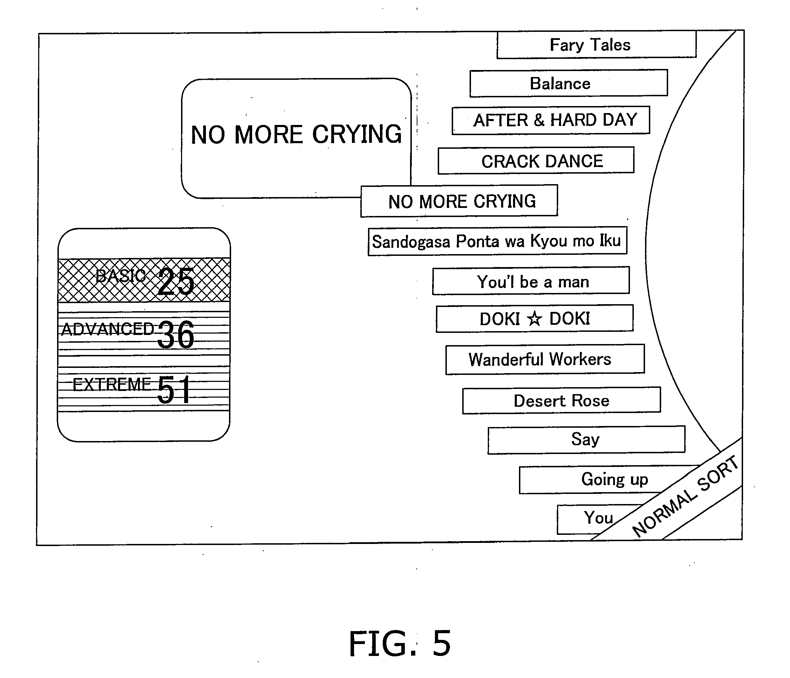

Fig. 5 is a view illustrating an example of a song selection screen.
[Fig. 6]

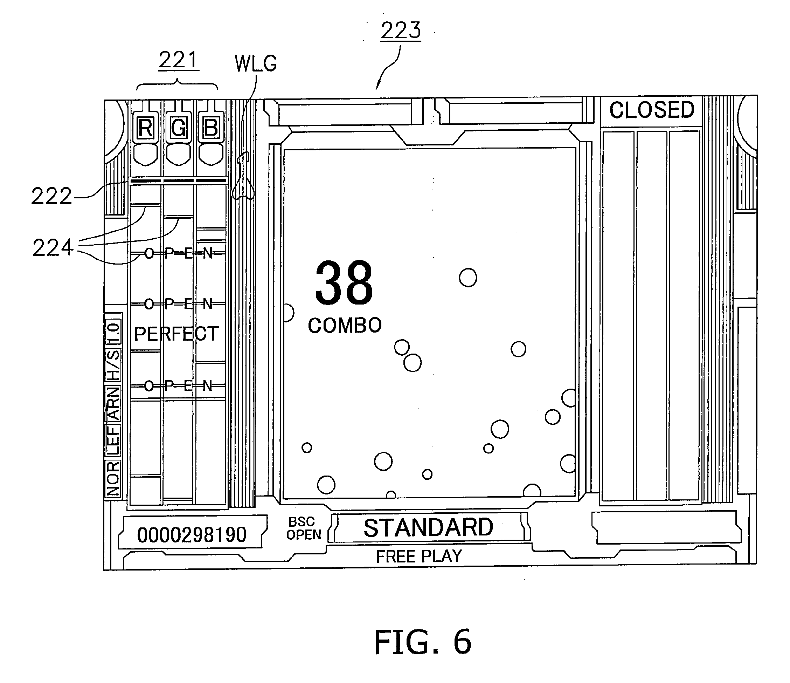

Fig. 6 is a view illustrating an example of a game screen.
[Fig. 7]

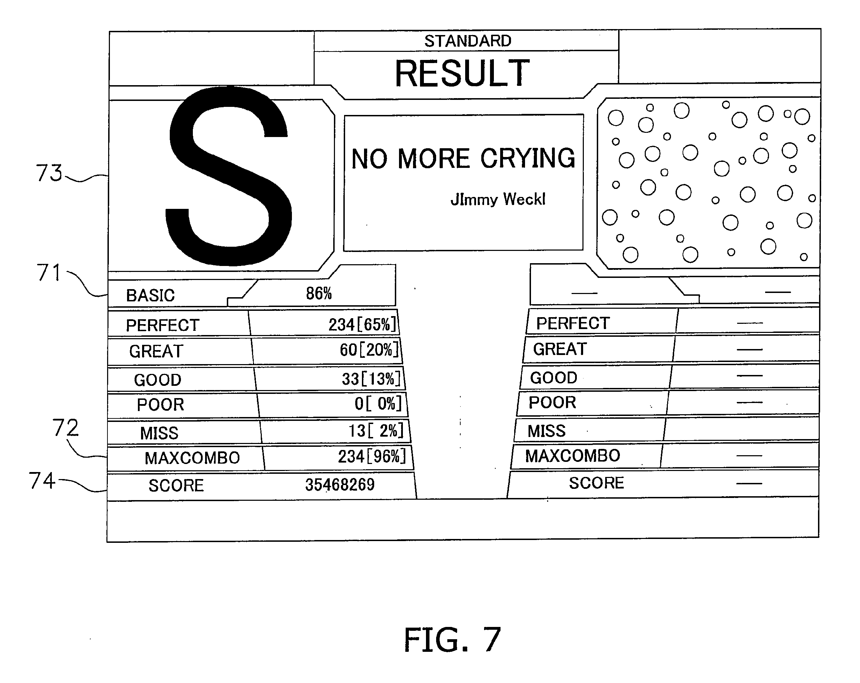

Fig. 7 is a view illustrating an example of a result screen at the end of a music game.
[Fig. 8]

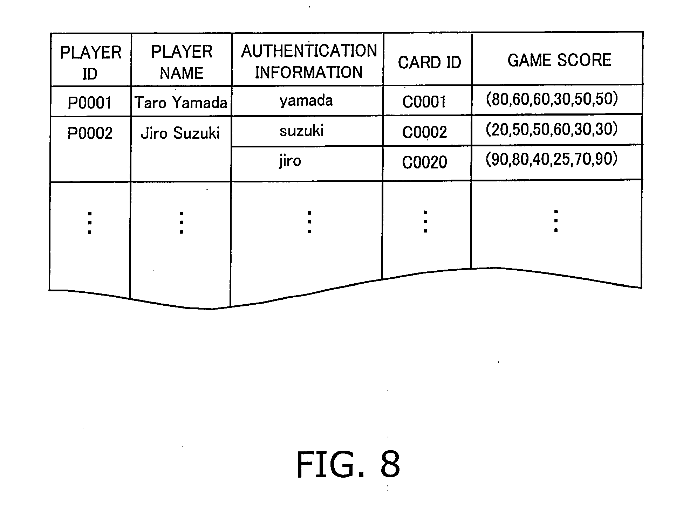

Fig. 8 is a conceptual view illustrating individual data which is stored in a central server.
[Fig. 9]

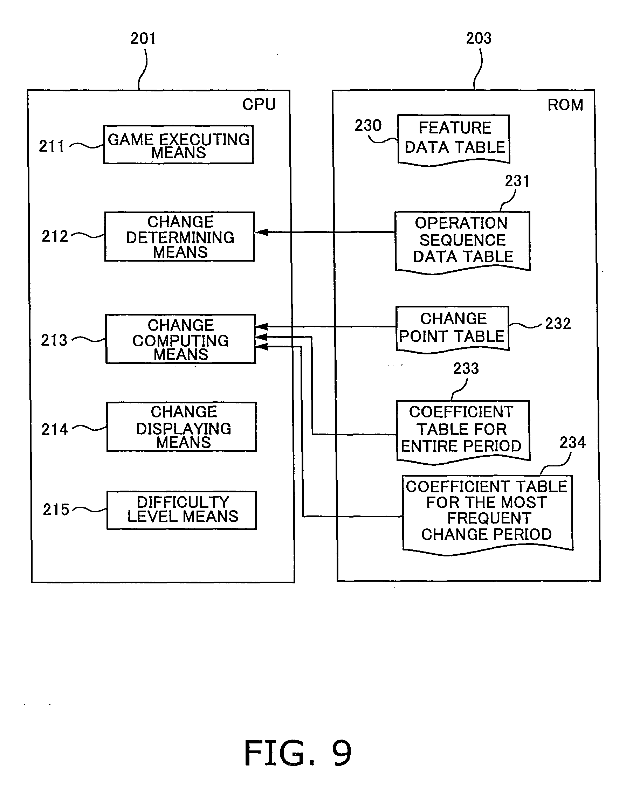

Fig. 9 is a view illustrating the functional structure of a CPU of a game terminal device.
[Fig. 10]

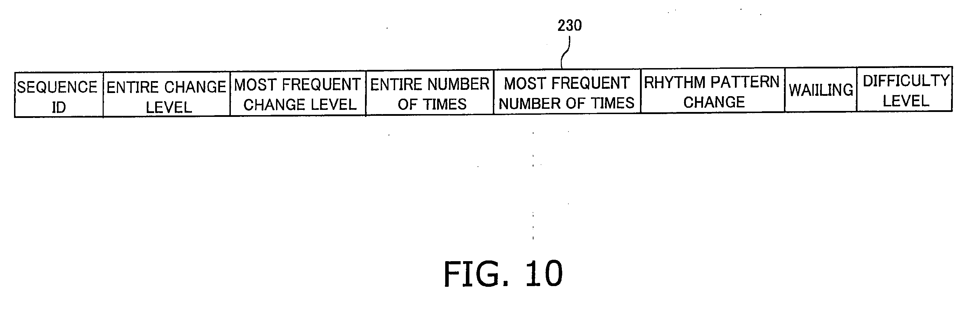

Fig. 10 is a view illustrating information stored in a feature data table.
[Fig. 11]

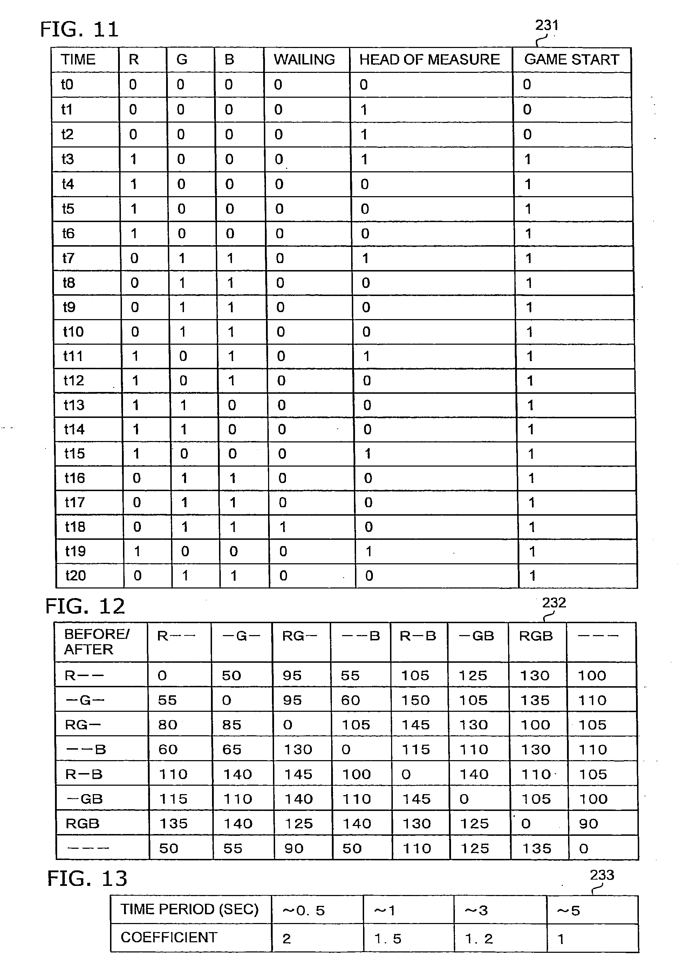

Fig. 11 is a conceptual view illustrating operation sequence data stored in an operation sequence data table.
[Fig. 12]
Fig. 12 is a conceptual view illustrating information stored in a change point table.
[Fig. 13]
Fig. 13 is a conceptual view illustrating information stored in a coefficient table for entire period.
[Fig. 14]

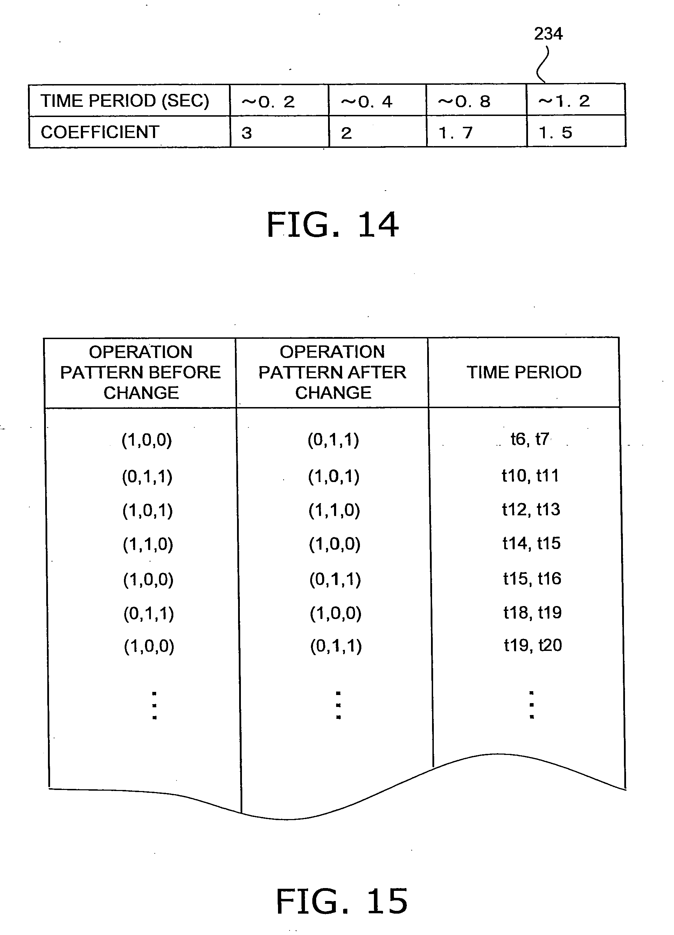

Fig. 14 is a conceptual view illustrating information stored in a coefficient table for the most frequent change period.
[Fig. 15]

Fig. 15 is a conceptual view illustrating an extracted pattern table which is generated for each sequence ID.
[Fig. 16]

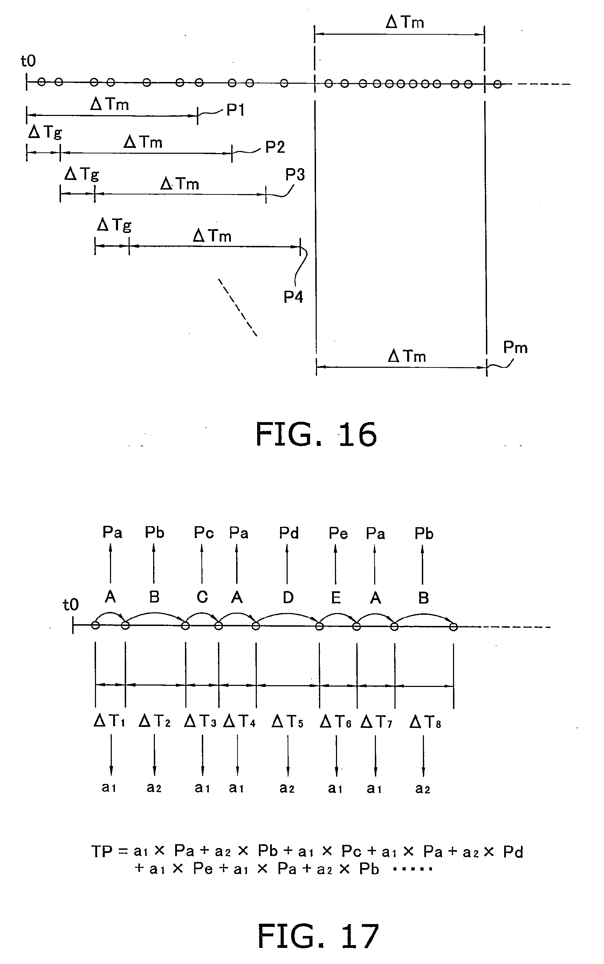

Fig. 16 is a view illustrating a method for determining a most frequent period Pm by change determining means.
[Fig. 17]
Fig. 17 is a view illustrating a method for computing an entire change level.
[Fig. 18]

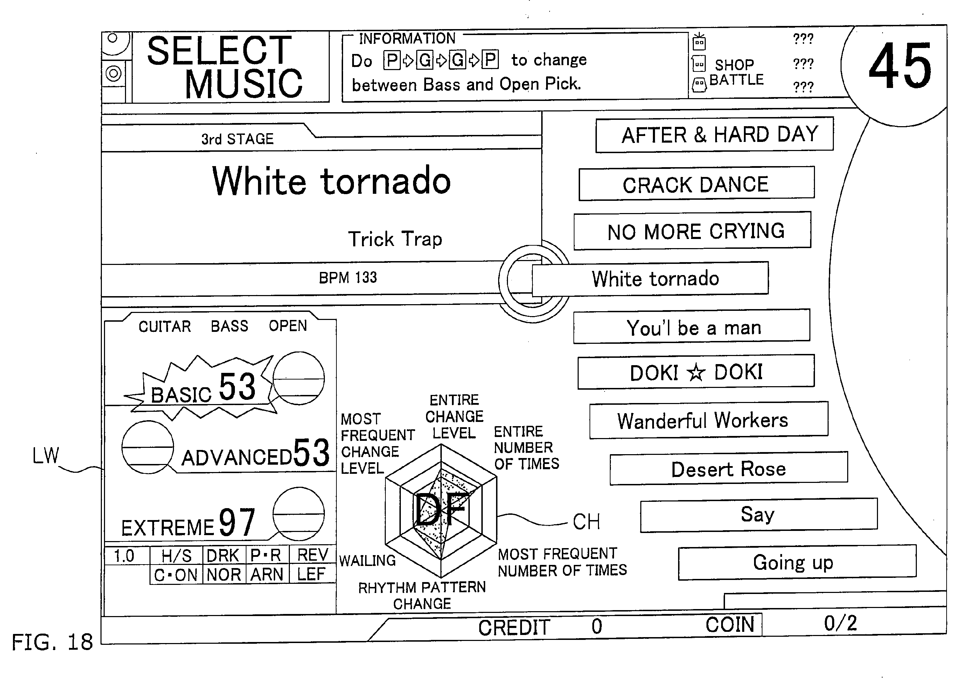

Fig. 18 is a view illustrating an example of a feature chart for the "BASIC" level of the music "White tornado".
[Fig. 19]

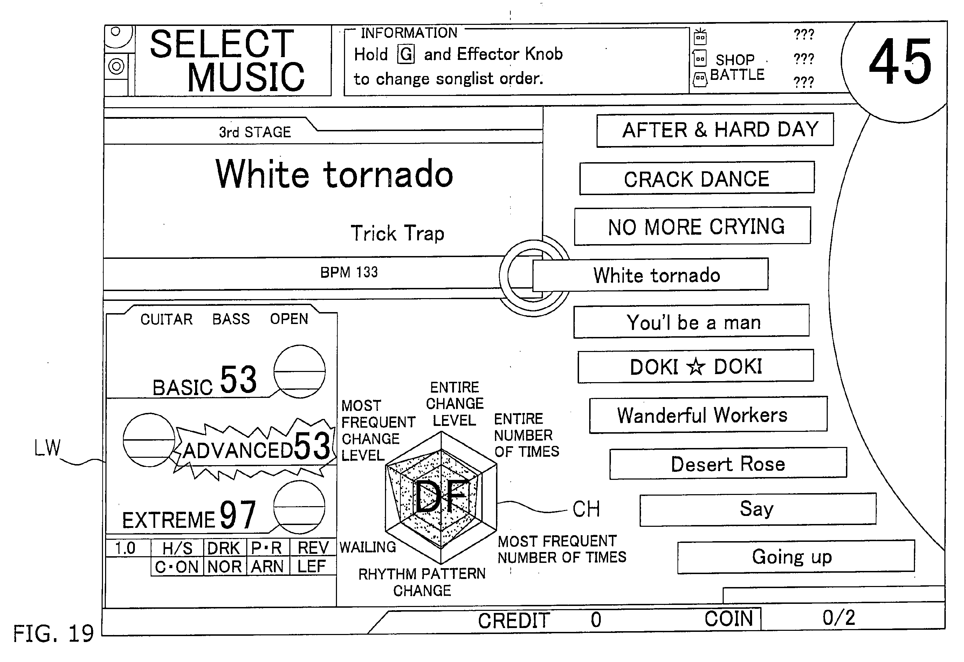

Fig. 19 is a view illustrating an example of a feature chart for the "ADVANCED" level of the music "White tornado".
[Fig. 20]

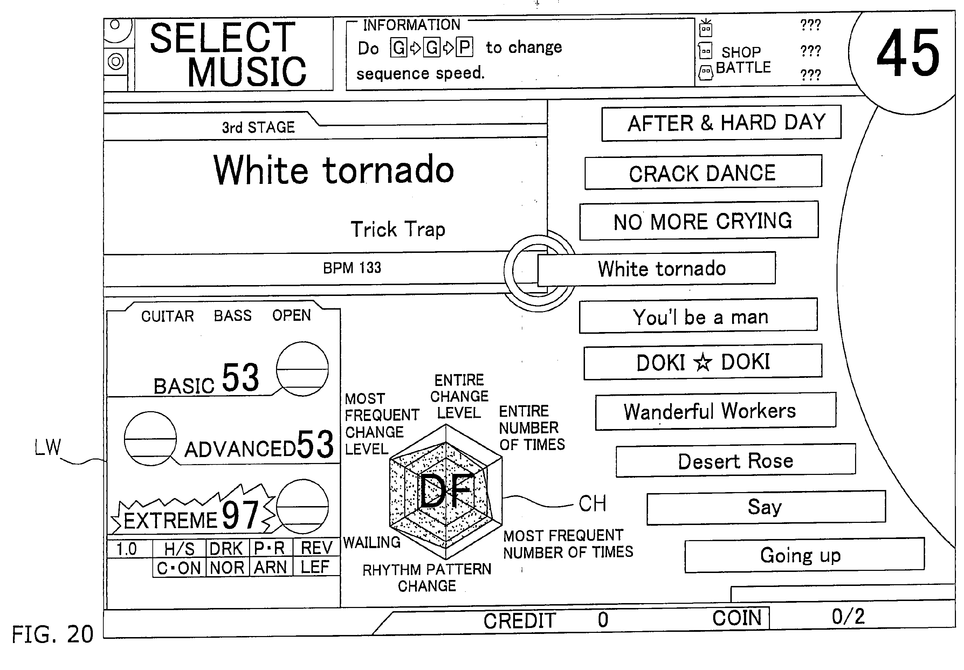

Fig. 20 is a view illustrating an example of a feature chart for the "EXTREME" level of the music "White tornado".
[Fig. 21]

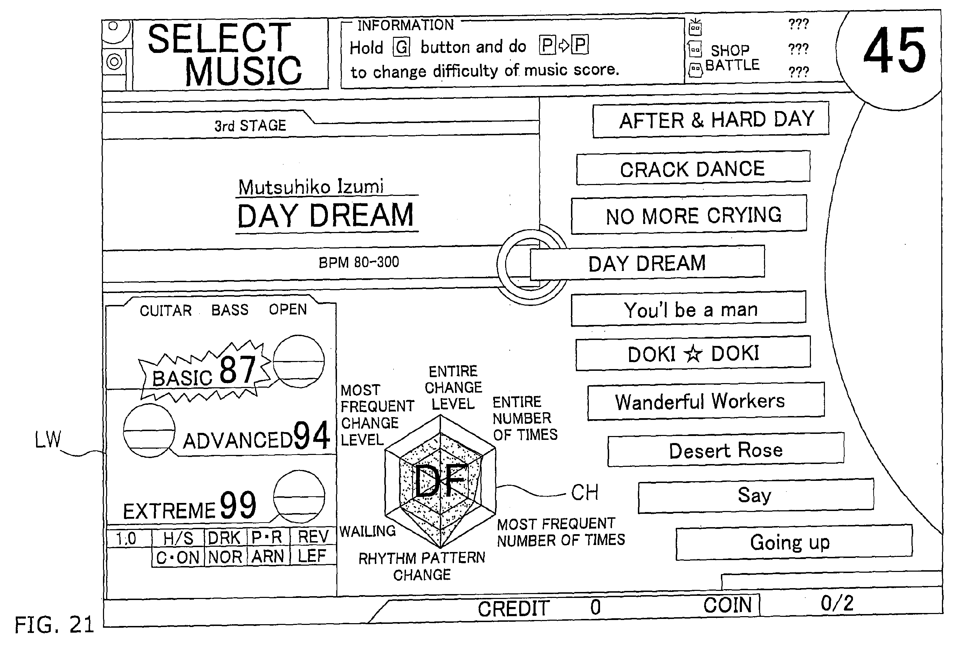

Fig. 21 is a view illustrating an example of a feature chart for the "BASIC" level of the music "DAY DREAM".
[Fig. 22]

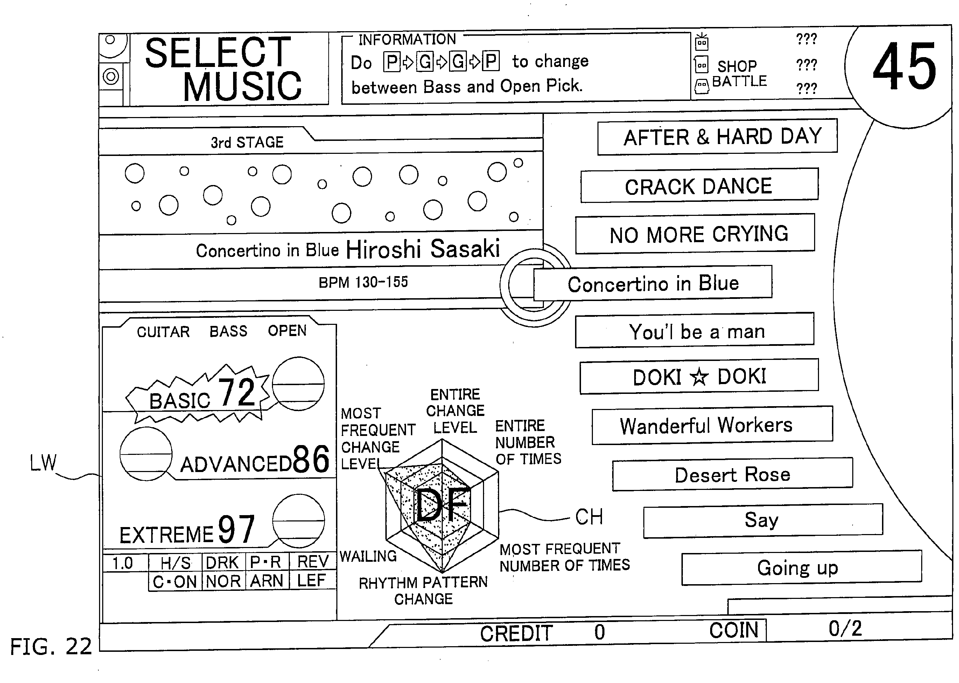

Fig. 22 is a view illustrating an example of a feature chart for the "BASIC" level of the music "Concertino in Blue".
[Fig. 23]

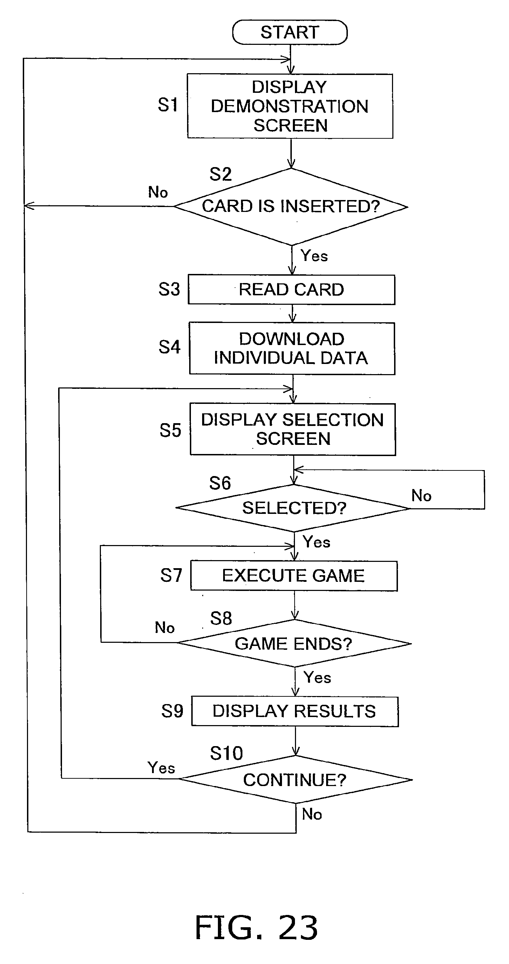

Fig. 23 is a flowchart showing an example of a main processing performed by a game terminal device.
[Fig. 24]

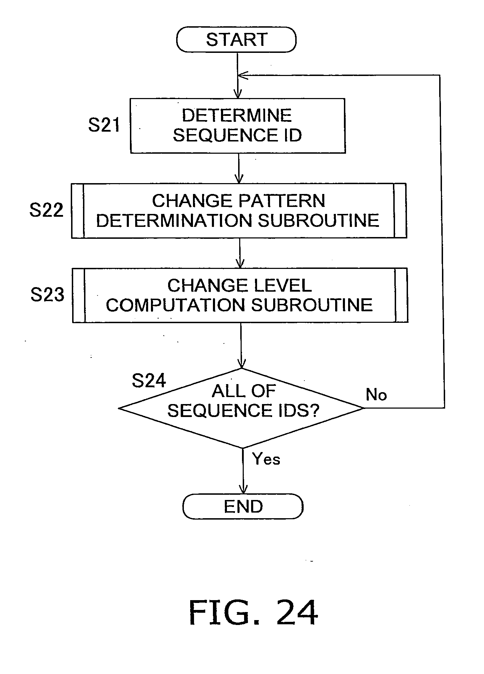

Fig. 24 is a flowchart showing an example of the flow of a feature data generating process performed by a game terminal device.
[Fig. 25]

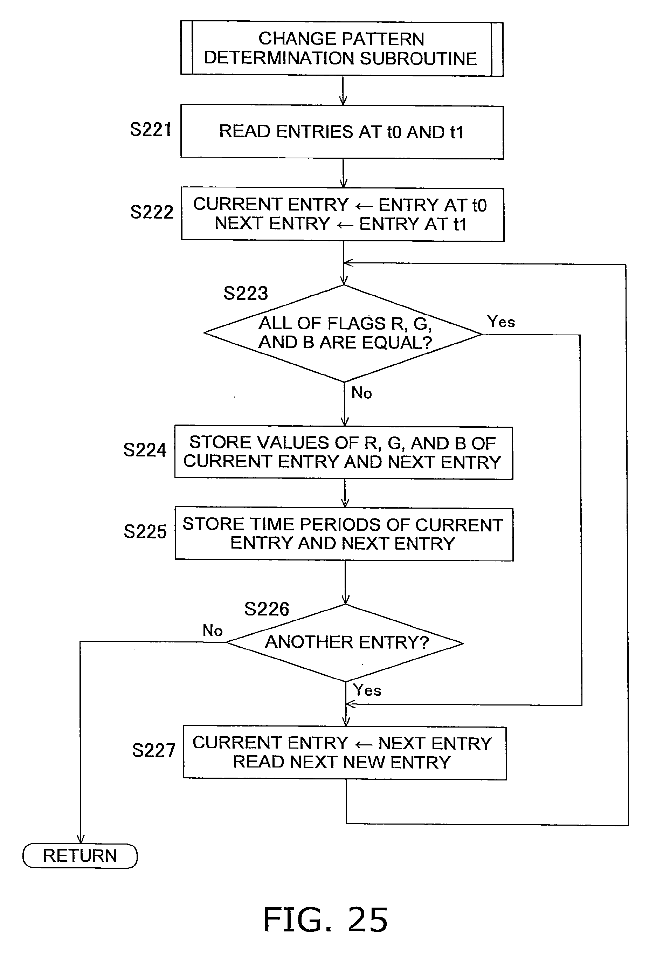

Fig. 25 is a flowchart showing an example of the flow of a change pattern determination subroutine performed by a game terminal device.
[Fig. 26]

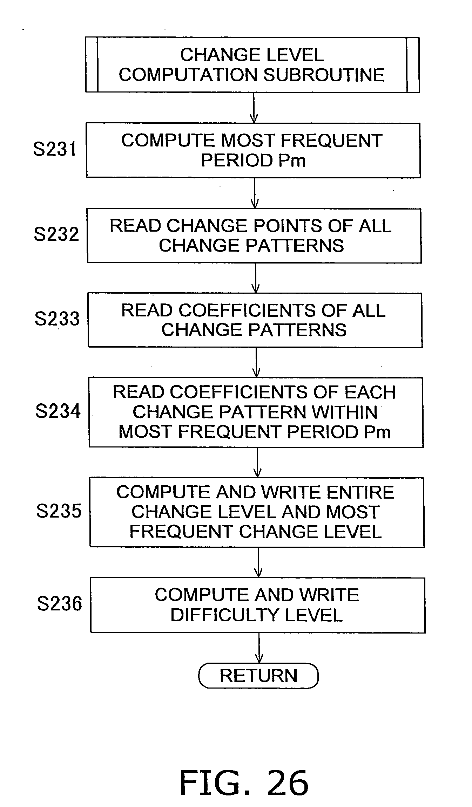

Fig. 26 is a flowchart showing an example of the flow of a change level computation subroutine performed by a game terminal device.

Best Mode for Carrying Out the Invention

<First Embodiment>

(1) Configuration of Game System According to the Present Embodiment

Fig. 1 is a view illustrating the whole configuration of a game system according to a first embodiment of the present invention. The game system is configured with a central server 100 and a plurality of game terminal devices 200a, 200b, and so on. The game system may further include cell phone terminals 150a, 150b, and so on, and computer terminals 160a, 160b, and so on. The game terminal devices 200, the cell phone terminals 150, and the computer terminals 160 are connected to the central server 100 via a network 300 such as the Internet.

(1-1) Central Server

The central server 100 receives individual data of each player from the game terminal devices 200 for storing. The central server 100 also sends the individual data in response to a request from a game terminal device 200 to the game terminal device 200. The central server 100 is provided with the following elements (a) to (e).

(a) CPU 101: for achieving a plurality of functions, which will be described later, based on a control program or the like stored in an ROM 103 or an RAM 102.
(b) RAM 102: for temporarily storing control programs, individual data, and the like.
(c) ROM 103: for storing control programs and the like.
(d) Data accumulation unit 104: for accumulating individual data of each player which is sent from the game terminal devices 200. The individual data includes authentication information such as player ID, passwords, and the like. The individual data will be described later in detail.
(e) Network communication unit 105: for sending and receiving data between the game terminal devices 200, the cell phone terminals 150, and the computer terminals 160 via the network 300.

(1-2) Game Terminal Device

Fig. 2 shows an example of the configuration of the game terminal devices 200. The game terminal device 200 may be a housing for game equipped with a CPU, a cell phone terminal 150, a computer terminal 160 connected to a monitor, a notebook PC, or the like. The game terminal device 200 includes the following elements (a) to (m).

(a) CPU 201: for achieving a plurality of functions, which will be described later, based on a control program or game data stored in an ROM 203 which will be described later.
(b) RAM 202: for temporarily storing various game data such as different variables, parameters, and the like.
(c) ROM 203: for storing control programs, various parameters such as feature parameters, feature data which will be described later, and the like.
(d) Network communication unit 204: for sending and receiving data between the central server 100 via the network 300.
(e) Monitor 206: for displaying game images during a game, scores for each game parameter in a game, characters before and after a game, and the like.
(f) Drawing processer 205: for generating image data to be displayed on the monitor 206.
(g) Speaker 208: for outputting sound such as sound effects during a game, when a demonstration screen is displayed, when a game score is displayed, or the like.
(h) Sound reproducer 207: for generating sound data to be outputted to the speaker 208.
(i) Input operation unit 211: for receiving an instruction input from a player. In the present embodiment, the input operation unit 211 is a guitar controller which has a shape designed to imitate a guitar, but may be a controller having any shape, such as the one designed to imitate a Japanese drum or a stringed instrument. The input operation unit 211 may include a key board, a drum set, a drum, a plurality of operation buttons, and a foot panel.

The input operation unit 211 has a plurality of operation members. The operation members are the members on which a player actually performs operations such as beating, pressing, and stamping. The guitar controller of the present embodiment is provided with three buttons R, G, and B (see Fig. 4 which will be described later) as the operation members. When the input operation unit 211 is a key board, the operation members are keys which constitute the key board. When the input operation unit 211 is a drum set, the operation members are each of the parts which constitute the drum set, that is, a snare drum, a bass drum, tam-tams, a floor tom, cymbals, a drum pedal, and the like. When the input operation unit 211 is a drum, the operation members are a rim, a head, a shell, and the like of the drum. When the input operation unit 211 is a plurality of operation buttons, the operation members are the individual operation buttons. When the input operation unit 211 is a foot panel having a plurality of switches, the operation members are the individual switches.

(j) Card reader/writer 212: for reading a card ID of an inserted magnetic card. The card reader/writer 212 may perform a write process for writing a player ID or a game score as needed.
(k) Coin Acceptor 213: for accepting a credit by inserted coins.
(l) External device control unit 210: for controlling external devices such as the input operation unit, the card reader/writer 212, and the coin acceptor 213.
(m) External input/output control unit 209: for generating control signals to the external devices such as the input operation unit, the card reader/writer 212, and the coin acceptor 213. Also, the external input/output control unit 209 receives detection signals from the external devices, and sends the signals to the CPU 201.

(2) Example of Game Terminal Device

(2-1) Configuration of Game Terminal Device

Fig. 3 is a perspective view showing the outline of a music game device which is a specific example of the game terminal device 200. In the game terminal device 200, a music game is implemented. The entire or a part of the feature data which is necessary to implement the music game is computed by and stored in the game terminal device 200 in the present embodiment. The game terminal device includes a housing provided with a monitor 206 on the front surface thereof. The monitor 206 is provided with: input operation units 211 a such as start buttons on the right and left hands of the lower portion thereof; and two coin acceptors 213 on the right and left hands below the input operation units 211 a. Furthermore, below the coin acceptors 213, a card reader/writer 212 is provided. On the right and left sides of the monitor 206, imitation instruments as the input operation units 211 to which a player inputs rhythmic sounds, that is, the guitar controllers 211b are installed. In addition, at the upper portion of the housing of the monitor 206, the speakers 208 are arranged for outputting presentation effects for a song to be performed. The two guitar controllers 211b are arranged side by side, which allows two players to play a music game by individually using the guitar controllers 211 b to input operations.
Fig. 4 is an enlarged view showing the guitar controller 211 b. The guitar controller 211 b has three neck buttons R, G, and B for selecting a type of rhythmic sound as operation members. The guitar controller 211b also has picking input means 211b-1 for determining an output timing of the rhythmic sound selected by at least one neck button. The guitar controller 211b further has a change-over switch 211 b-2 which is arranged below the picking input means 211b-1 for switching an outputting mode of a rhythmic sound.

(2-2) Implementation of Game

The game terminal device 200 configured as above described implements a game as follows, in accordance with a control program stored in the ROM 203. A player inserts his/her own magnetic card into the card reader/writer 212 of the game terminal device 200, and drops a coin into the coin acceptor 213. The game terminal device 200 reads a card ID from the card inserted into the card reader/writer 212, and requests an input of a password to the player. The card ID identifies the magnetic card. An inputted password is compared with data in the central server 110 for a personal verification. When the game terminal device 200 accepts an instruction to start a game from the verified player, the CPU 201 executes a control program to start the game. The start of the game triggers the computation of scores of predetermined game parameters.

(2-3) Summary of Game

Next, with reference to Figs. 5 to 7, the summary of a music game which is implemented in the game terminal device 200 will be explained below. Fig. 5 shows an example of a song selection screen which is displayed on the monitor 206. The song selection screen accepts selections of a song and a level from a player. In Fig. 5, the song title "NO MORE CRYING" and the level "BASIC" are selected. In the example, one of the levels "BASIC", "ADVANCED", and "EXTREME" can be selected for one song. For each level, a difficulty level value of the song is displayed, which helps a player select a song and a level. The difficulty level value represents the difficulty of the selected song and level which is expressed as a value within a range of from 1 to 99

Fig. 6 shows an example of a game screen 223 displayed on the monitor 206. In the game, notes 224 for indicating operation timings for each rhythmic sound in a song are, as shown in Fig. 6, displayed on a note display unit 221 separately for each rhythmic sound. Here, each rhythmic sound individually corresponds to a sound to be picked by pressing the neck button R, G, or B of the guitar controller. The notes 224 independently and sequentially move in a direction toward a reference line 222 of the note display unit 221 (for example, upward in Fig. 6) for each rhythmic sound as a song progresses. The operation timing a player should operate the picking input means 211b-1 is when the note 224 reaches the reference line 222. A player operates the neck buttons R, G, and B with one hand and operates the picking input means 211b-1 and the change-over switch 211 b-2 with the other hand in accordance with rhythmic sounds, while checking the positions of the notes 224, so as to input operation signals. The mark "OPEN" in the note display unit 221 indicates an instruction of open pick in which a player does not press any neck button. The guitar-shaped mark WLG indicates an instruction of "Wailing" in which a player tilts the guitar controller upright.

The notes 224 for each rhythmic sound are displayed based on operation sequence data. At least one set of operation sequence data is generated for each song for defining which neck button should be operated at which timing. Specifically, the operation sequence data sets relative time information from the start point of a song and the on/off state of each of the neck buttons R, G, and B to be in correspondence with each other. In the present embodiment, up to 9 sets of operation sequence data are generated for one song. Among them, 6 sets of the operation sequence data are differently generated for three levels of a guitar part and a bass part respectively. The remaining 3 sets of the operation sequence data are generated for a guitar part with an open pick operation. Each song and level is set to correspond to an operation sequence data (not shown). Therefore, a selection of a song and level results in a selection of one set of operation sequence data. There is no limitation on the set number of operation sequence data which correspond to one song, and the set number may be different for different songs. The operation sequence data will be described later in detail.

The CPU 201 monitors the deviation between an operation timing by a player and an operation signal input timing, and displays "Perfect", "Great", "Good", "Poor", or "Miss" depending on the size of the deviation, and also counts the occurrence frequency of the deviations. The CPU 201 computes a part or all of the scores of predetermined game parameters to determine a game score of the player based on the occurrence frequency of the deviations. In the example, the game parameters include the following seven types. However, the types and numbers of game parameters may be set in accordance with a game rule, and not limited to those of the present example.

<Examples of Game Parameters>

   (a) Skill Point: computed in accordance with the occurrence frequencies of "Perfect", "Great", "Good", and "Poor".

(b) Highest Combo Number: a combo number indicates a time period between the occurrences of "Miss", and highest combo number indicates the longest time period between the occurrences of "Miss".

(c) Difficulty Level Value: a difficulty level value of a song selected by a player (see Fig. 5).

(d) Amount of Remaining Life: computed by subtracting a predetermined value in response to the occurrence of "Miss".

(e) Rank: a rank to which a player belongs.

(f) Number of "Perfect": the total number of "Perfect" while a song is being played.

(g) Score: computed based on the value of each of the above parameters from (a) to (f) and a predetermined formula.

Fig. 7 shows an example of a result screen at the end of a music game. At the end of a game, the CPU 201 displays the skill point 71 ("BASIC" and "86%" of Fig. 7), the highest combo number 72 ("MAXCOMBO" and "234 [96%]" of Fig. 7), the rank 73 ("S" of Fig. 7), the score 74 ("SCORE" and "35468269" of Fig. 7), and the like. The present example shows a result screen when a game by one player ends, but when a game by two players ends, game scores for both players are displayed.

In a case where the amount of remaining life is not zero when one song ends, a player can go to a next stage. Therefore, a player can go to a next stage until the amount of remaining life becomes zero, so that the player enjoys the game with a plurality of songs. When the amount of remaining life becomes zero, even if a song is not completed, the game ends.

(3) Functional structure of Central Server and Game Terminal Device

(3-1) Functional structure of Central Server

Fig. 8 is a conceptual view illustrating of individual data. Individual data is collected by the CPU 101 of the central server 100 which functions as individual data sending/receiving means 111 (see Fig. 1), and is accumulated in the data accumulation unit 104.

In the example, the individual data includes "player ID", "player name", "authentication information", "Card ID", and "game score", in one record. The "player ID" is identification information to identify a player. The "player name" is a name of a player. The "authentication information" is a password or pin number used in authentication of a player. The "Card ID" is identification information to identify a card a player owns. Each card has a card ID recorded therein. The "game score" is a cumulative sum of the scores for each game parameter in the games a player played in the past. The cumulative sum of game parameters in a game score may be the one of the scores for each game parameter computed for one type of music game, or the one of the scores for each game parameter commonly evaluated for different types of music games or different versions of music games.

With reference to Fig. 1 again, the function of the individual data sending/receiving means 111 the CPU 101 has will be explained below. The individual data sending/receiving means 111 receives the above described individual data from each game terminal device 200, and updates the data accumulation unit 104. For example, upon receiving a game score which includes a player ID and values of each game parameter from the game terminal device 200, the individual data sending/receiving means 111 updates the values of each game parameter corresponding to the player ID. That is, the individual data sending/receiving means 111 updates the cumulative sum of each game parameter by adding the received value to the cumulative sum of each game parameter.

The individual data sending/receiving means 111 also responds to a request from a game terminal device 200, and sends the individual data which is associated with the player ID included in the request to the game terminal device 200.

(3-2) Functional structure of Game Terminal Device

Fig. 9 is a view illustrating the functional structure of a game terminal device 200. In the present embodiment, a game terminal device has a function as a music game device and a function as a data computation apparatus for music game. Specifically, the CPU 201 of the game terminal device 200 includes game executing means 211, change determining means 212 (which corresponds to change determining means), change computing means 213 (which corresponds to change computing means), change displaying means 214 (which corresponds to change displaying means), and difficulty level means 215 (which corresponds to difficulty level means). The ROM 203 of the game terminal device 200 stores a feature data table 230, an operation sequence data table 231, a change point table 232, an coefficient table for entire period 233, and a coefficient table for the most frequent change period 234. Using these means and tables, the CPU 201 of the game terminal device 200 computes the features of operation sequence data generated for each song, and displays the result on the screen for song selection.

Now, each table stored in the ROM 203 will be first explained, and then the function of the CPU 201 will be explained below.

(3-2-1) Tables Stored in ROM

<Feature Data Table>

Fig. 10 is a view illustrating information stored in the feature data table 230. The feature data table stores feature data which describes features of each operation sequence data, in correspondence with each operation sequence data. The feature data at least includes "Sequence ID", "Entire Change Level", and "Most Frequent Change Level". In addition, in the present example, the feature includes "Entire Number of Times", "Most Frequent Number of Times", "Rhythm Pattern Change", "Wailing" and "Difficulty Level".

The "sequence ID" is an identifier which specifies one set of operation sequence data. The sequence ID may be a pointer or address that indicates a storage address, for example. The sequence ID corresponds to a song and its level (not shown), and so a selection of a song and its level specifies a corresponding sequence ID. The "entire change level" indicates a difficulty level of a change of neck buttons in one set of operation sequence data. The "most frequent change level" indicates a difficulty level of a change of neck buttons in a period of time (hereinafter, referred to as the most frequent period Pm) when the neck buttons are most frequently changed in a unit time $\Delta$Tm. As will be described later, the "Entire Change Level" and the "Most Frequent Change Level" are values obtained by computations.

The "entire number of times" is an index indicating the frequency of operations in one set of operation sequence data. For example, an average number of operations in a unit time $\Delta$Ta may be obtained using an operation sequence data for one song. The "most frequent number of times" is an index indicating the frequency of operations during the period when the number of operations per unit time is the maximum in one set of operation sequence data. For example, based on operation sequence data, the period when the number of operations per unit time is the maximum may be obtained. The "Rhythm Pattern Change" is an index indicating the variations and difficulties of rhythm patterns which are specified by an operation sequence data. The "Wailing" indicates if there is an instruction to tilt the guitar controller 211 b upright or not. The "Difficulty Level" indicates a difficulty of a game in accordance with each operation sequence data. In the present embodiment, a difficulty level value is computed using a predetermined formula at least based on an entire change level and a most frequent change level.

<Operation Sequence Data Table>

Fig. 11 is a conceptual view illustrating operation sequence data which is stored in the operation sequence data table 231. Operation sequence data defines which neck button is turned on at which timing. Operation sequence data also defines at which timing the "Wailing" operation is performed. Operation sequence data further defines the tops of measures and the timing to start a game. Specifically, operation sequence data stores "time", "R" flag, "G" flag, "B" flag, "Wailing" flag, "top of measure" flag, and "game start" flag in correspondence with each other. The "time" indicates relative times to the start of a song. Each flag indicates an on-state by "1", and an off-state by "0". A neck button with a flag of "1" at a certain time indicates that it is the timing for the neck button to be operated.

According to the operation sequence data, in the game screen 223 of Fig. 6, an operation instruction can be outputted as follows for example. An introduction of a song is played from time t0 to t3, and a game is started at time t3. At the timings t3, t4, t5, and t6, the note 224 of the neck button R reaches the reference line 222. At the timings t7, t8, t9, and t10, the notes 224 of the neck buttons G and B reach the reference line 222. In this way, the notes 224 and the reference line 222 relatively move according to the operation sequence data to reach each other, so as to indicate operation timings of the neck buttons and pickings.

<Change Point Table>

Fig. 12 is a conceptual view illustrating information stored in the change point table 232. The change point table 232 stores a predetermined change point for each change pattern of neck button operations. There are 8 operation patterns of the neck buttons R, G, and B as follows.

    (i) R
    (ii) G
    (iii) B
    (iv) R and G
    (v) R and B
    (vi) G and B
    (vii) R, G, and B

(viii) None (open pick)

The change point table 232 stores change points which indicate the difficulties of change patterns, with respect to all of the change patterns from one operation pattern to another operation pattern. In the example, more difficult change patterns are set to have higher change points. The change points are set in consideration of the direction of change. For example, the change point of the change pattern "R→G" from operation pattern "R" to an operation pattern "G" is "50", while the change point of the opposite change pattern "G → R" is "55". This is because a change pattern in a different direction may have a different difficulty.

The number of the operation patterns is equal to the combination number of one or a plurality of neck buttons a player can operate at one time. Thus, the number of the operation patterns depends on the number, arrangement, and size of the neck buttons.

<Coefficient Table for Entire Period>

Fig. 13 is a conceptual view illustrating information stored in the coefficient table for entire period 233. The coefficient table for entire period 233 stores "time period" and "coefficient" in correspondence with each other. The "time period" is a time period during which a change pattern occurs , and a shorter time period is set to have a higher "coefficient" in the example of the coefficient table for entire period 233. The "coefficient" is used in computation of the entire change level stored in the feature data table.

For example, assume that, in a certain operation sequence data, a change pattern A from an operation pattern OPa to an operation pattern OPb is set have a period of 0.3 second. In the case, a change point Pa of the change pattern A which is read out of the change point table 232 is multiplied by a coefficient "2" corresponding to the 0.3 second in the coefficient table for entire period 233.

The coefficient table for entire period 233 is not essential. This is because an entire change level can be computed without coefficients. However, when time periods generated by change patterns are weighted by coefficients, the difficulties in changes of operation patterns due to the speed can be reflected in the computation of an entire change level, in addition to the difficulties simply in the changes of operation patterns. Thus, the resulting computed entire change level is expected to be closer to the feeling of a player.

<Coefficient Table for the Most Frequent Change Period>

Fig. 14 is a conceptual view illustrating information stored in the coefficient table for the most frequent change period 234. The coefficients stored in the table are used in computation of a most frequent change level. Specifically, coefficient table for the most frequent change period 234 stores "time period" and "coefficient" in correspondence with each other, similar to the coefficient table for entire period 233. The "time period" is a time period during which a change pattern occurs , and a shorter time period is set to have a higher "coefficient" in the present example. However, the time periods which are set in a plurality of stages are shorter periods of time than the most frequent period Pm. In the example, the most frequent period Pm is assumed to be 2 seconds. The "coefficient" is used in computation of the most frequent change level stored in the feature data table.

For example, assume that, in the most frequent period Pm of a certain operation sequence data, a change pattern A from an operation pattern OPa to an operation pattern OPb is set to have a period of 0.1 second. In the case, a change point Pa of the change pattern A which is read out of the change point table 232 is multiplied by a coefficient "3" corresponding to the 0.1 second in the coefficient table for the most frequent change period 234.

The coefficient table for the most frequent change period 234 is not essential for the same reason as that for the coefficient table for entire period 233. However, when time periods generated by change patterns in the most frequent period Pm are weighted by coefficients, the difficulties in switching of operation patterns for the speed in the most frequent period Pm can be reflected in computation of the most frequent change level. Thus, the resulting computed most frequent change level is expected to be closer to a feeling of a player.

(3-2-2) Functions of CPU

<Game Executing Means>

The game executing means 211 downloads individual data from the central server 100 prior to an execution of a game. The individual data to be downloaded includes the game scores of a player in the past which are cumulative sums for each of the game parameters.

The game executing means 211 computes a plurality of game parameters of the player after the execution of the game. When the game is executed at a plurality of stages, the game executing means 211 may calculate the cumulative sum of the game parameters at each stage after the plurality of stages are completed.

<Change Determining Means>

The change determining means 212 extracts all of the change patterns of the neck buttons included in operation sequence data. The all of the extracted change patterns are temporarily stored as an extracted pattern table in a working storage area. The change determining means 212 further extracts the change pattern in the most frequent period Pm from the all of the extracted change patterns.

(i) Extracted Pattern Table

Fig. 15 is a conceptual view illustrating an extracted pattern table generated for each sequence ID. Not shown, but an extracted pattern table is generated for each sequence ID. The extracted pattern table stores "operation pattern before change", "operation pattern after change", and "time period", in correspondence with each other. The "operation pattern before change" and the "operation pattern after change" are the operation patterns at a time $t_n$ and a next time $t_{n+1}$, respectively, when the operation patterns at the time $t_n$ and the time $t_{n+1}$ are different from each other in operation sequence data. In the example, the operation pattern is represented by the on/off states (R, G, and B) of the neck buttons R, G, and B. The "time period" is a time period between the time $t_n$ and the time $t_{n+1}$, that is, a time period during which a change pattern occurs, and the time $t_n$ and the time $t_{n+1}$ themselves are stored in the present example. The storage of the times themselves instead of the time period between the times provides an advantage that the most frequent period Pm can be determined based on the extracted pattern table.
The extracted pattern table of Fig. 15 is made based on the operation sequence data shown in Fig. 11. The first change pattern in the operation sequence data of Fig. 11 is the one from the operation pattern (1, 0, 0) at a time t4 to the operation pattern (0, 1, 1) at the time t5. Thus, this change pattern is described in the extracted pattern table as the first entry. After the description, based on operation sequence data, every change pattern is similarly described in the extracted pattern table.

(ii) Most Frequent Period Pm

Fig. 16 shows a method for determining the most frequent period Pm using the change determining means 212. The change determining means 212 determines the period with the highest number of entries within a predetermined time period ΔTm among the entries described in the extracted pattern table, that is the most frequent period Pm, based on the extracted pattern table.
The circles on the straight lines of Fig. 16 are the points of time at which change patterns occurred after the song starting point of time t0, for example one of the two operation timings before and after a change of an operation pattern. The change determining means 212 determines the entries within each of the periods P1, P2, P3, and the like which are separated from each other by a constant time interval ΔTg, based on the time information in the extracted pattern table. In the example, because the time information before and after a change of an operation pattern is included in the extracted pattern table, based on the time information after a change of an operation pattern for example, the change determining means 212 determines the entries within each of the periods P1, P2, P3, and the like. Each of the periods P1, P2, P3, and the like has the same time period ΔTm as that of the most frequent period Pm. Furthermore, the change determining means 212 counts the number of the entries N1, N2, N3, and the like within the periods P1, P2, P3, and the like. The period having the highest number of entries which are counted as described above is determined to be the most frequent period Pm.

<Change Computing Means>

The change computing means 213 digitizes the change levels of the neck buttons in each operation sequence data based on the change patterns determined by the change determining means 212 and the corresponding change points. That is, the change computing means 213 computes the entire change level and the most frequent change level of each operation sequence data based on the extracted pattern table (Fig. 15), the change point table 232, the coefficient table for entire period 233, and the coefficient table for the most frequent change period 234. The computed values are written in the fields of "Entire Change Level" and "Most Frequent Change Level" of the entries respectively which are specified by the sequence ID of each operation sequence data, among the entries of the feature data table 230.

(i) Computation of Entire Change Level

Fig. 17 is a view illustrating a method for computing an entire change level. The straight line in the figure is a time axis with the point of time t0 to start a song. The circles on the time axis show the operation timings having adjacent operation timings for different operation patterns, among the operation timings. As shown in the figure, the change patterns occur in the following sequence: A → B → C → A → D → E → A → B. The first change pattern A has a time period $\Delta$T1, and corresponds to a change point Pa. The next change pattern B has a time period $\Delta$T2, and corresponds to a change point Pb. The change computing means 213 calculates an entire change level using the following formula, based on the time periods, the change points, and the coefficients of the entire coefficient table 233 of each of the change patterns. In the following formula, "a1" is coefficient for the time periods $\Delta$T1, $\Delta$T3, $\Delta$T4, $\Delta$T6, and $\Delta$T7 in the figure, while "a2" is coefficient for the time periods $\Delta$T2, $\Delta$T5, and $\Delta$T8.

$$TP = a1 \times Pa + a2 \times Pb + a1 \times Pc + a1 \times Pa + ...$$

A further specific explanation will be added below. The change computing means 213 reads the change point of each change pattern included in the extracted pattern table out of the change point table 232. The change computing means 213 also reads the coefficient according to the time period of each change pattern included in the extracted pattern table out of the coefficient table for entire period 233. The change computing means 213 obtains a value by multiplying the read change point by the read coefficient for each change pattern, and computes the sum total of the obtained values. This enables a computation of an entire change level, with the change points of change patterns included in each operation sequence data being weighted according to the time periods of the change patterns. The weighting according to time periods is not essential, but usually a player feels differently about the difficulty of a change pattern depending on the time period. Therefore, the weighting in accordance with time periods is expected to make the computation result closer to the difficulty of a change of operation patterns a player feels.

(ii) Computation of Most Frequent Change Level

The change computing means 213 computes a most frequent change level as in the case of the computation of an entire change level. That is, the change computing means 213 reads the change point of each change pattern within the most frequent change period out of the change point table 232. The change computing means 213 also reads the coefficient according to the time period of each change pattern included in the extracted pattern table out of the coefficient table for the most frequent change period 234. The change computing means 213 obtains a value by multiplying the read change point by the coefficient of the change point for each change pattern, and computes the sum total of the obtained values. This enables a computation of a most frequent change level, with the change points of change patterns within the most frequent period Pm being weighted according to the time periods of the change patterns.

Similar to the computation of an entire change level, the weighting according to time periods is not essential, but the weighting is expected to make the computation result closer to the difficulty of a change of operation patterns a player feels.

<Change Displaying Means>

The change displaying means 214 displays the entire change level and the most frequent change level computed by the change computing means 213 in correspondence with the operation sequence data on the monitor 206. The display form may be the values as they are or the values which are obtained by normalizing and converting the computed values to be within a predetermined range. Alternatively, the change levels may be displayed as level differences within a predetermined range using a diagram such as a chart and various graphs, instead of the values.

Figs. 18 to 22 show displayed examples of the entire change level and the most frequent change level. In the examples, a feature chart CH is displayed based on "Entire Change Level", "Most Frequent Change Level", "Entire Number of Times", "Most Frequent Number of Times", "Rhythm Pattern Change", and "Wailing", among the values stored in the feature data table 230. The feature chart CH shows the feature data of the operation sequence data corresponding to the song and the level which are currently selected on the song selection screen.

Fig. 18 shows a feature chart CH for a level "BASIC", Fig. 19 shows a feature chart CH for a level "ADVANCED", and Fig. 20 shows a feature chart CH for a level "EXTREME". Figs. 18 to 20 show that the same operation sequence data for the same song "White tornado" at different levels have different the feature data, especially the entire change level and the most frequent change level.

Fig. 21 shows a feature chart CH for the song "DAY DREAM", and Fig. 22 shows a feature chart CH for the song "Contcertino in Blue". Figs. 21 and 22 show that the operation sequence data for different songs at the same level "BASIC" have different the feature data, especially the entire change level and the most frequent change level.

<Difficulty Level Means>

The difficulty level means 215 computes a difficulty level value of a game based on each operation sequence data, using the values of the entire change level and the most frequent change level computed by the change computing means 213, and writes the value in the feature data table 230 in correspondence with a sequence ID. The difficulty level means 215 also may read a difficulty level value of operation sequence data corresponding to the song and level which are selected on the song selection screen, from the feature data table 230, while a game is executed, to display on the monitor 206. Figs. 18 to 22 show the examples in which a difficulty level value is displayed for each operation sequence data. A level window LW in each figure displays a difficulty level value of operation sequence data at each level, in correspondence with the levels "BASIC", "ADVANCED", and "EXTREME".

A difficulty level value may be computed by any method using an entire change level and a most frequent change level. For example, a difficulty level value may be the sum of an entire change level and a most frequent change level, or the sum of the values obtained by multiplying an entire change level and a most frequent change level by a coefficient individually for weighting. The computing of a difficulty level value based on both of the values of an entire change level and a most frequent change level allows the difficulty in a change of operation patterns to be reflected in a difficulty level value based on a certain criteria. A difficulty level obtained as described above has an improved reliability because of the defined computation criterion.

Other data in the feature data table may be also reflected to a difficulty level value. For example, in addition to "Entire Change Level" and "Most Frequent Change Level", other data stored in the feature data table 230, that is, "Entire Number of Times", "Most Frequent Number of Times", "Rhythm Pattern Change", and "Wailing" may be multiplied by a coefficient individually for weighting, so that the sum of the resulting values is set to be a difficulty level value.

(4) Process Flow

(4-1) Main Process

Fig. 23 is a flowchart showing an example of main process flow performed by the game terminal device 200. A power supply to the game terminal device 200 causes the following process to start.

Step S1 to S2: The CPU 201 waits for an instruction to start a game while displaying a demonstration screen (S1). For example, when a coin is dropped in, and a magnetic card is inserted in the card reader/writer 212 (S2), the process goes to Step S3.

Step S3: The CPU 201 acquires a card ID the card reader/writer 212 read.

Step S4: The CPU 201 sends the read card ID to the central server 100, and downloads the individual data corresponding to the card ID. The individual data to be downloaded includes authentication information. Then, the CPU 201 prompts a player to input authentication information such as a password. The CPU 201 compares the inputted authentication information with the authentication information included in the individual data to check if the player is the person in correspondence with the card ID.

Step S5 and S6: The CPU 201 displays a song selection screen, and accepts a selection of a song and a level. On the song selection screen, for example, levels and the difficulty level values of operation sequence data for each level, and feature charts CH of each operation sequence data are displayed in correspondence with each song title.

Step S7 and S8: The CPU 201 executes a game based on the selected operation sequence data to the end of the game, and computes the game parameters of the player.

Step S9: The CPU 201 displays a result screen. On the result screen, the values of the game parameters computed following the execution of the game may be displayed.

Step S10: The CPU 201 inquires the player if the player continues the game or not, and when the game is continued, the process goes back to Step S5, and the CPU 201 accept a selection of a song and a level, that is, a selection of an operation sequence data again. When game is not continued, the process goes back to Step S1, and the CPU 201 displays the demonstration screen.

The above process provides the display of a change level which is at least a part of the features of operation sequence data. The change level is computed according to the defined criterion as described above, thereby the display of the change level improves the reliability of the displayed feature data.

(4-2) Feature Data Generating Process

(i) Feature Data Generating Process

Fig. 24 is a flowchart showing an example of the flow of a feature data generating process performed by the game terminal device 200. The process is preferably performed in response to a special command inputted by a producer prior to the shipment of the game terminal device 200. The process is basically performed only once. Before the process is performed, none of the entire change level, the most frequent change level and, the difficulty level value of the feature data table 230 are stored yet.

Step S21: The CPU 201 reads one sequence ID out of the feature data table 230.

Step S22: The CPU 201 executes a change pattern determination subroutine based on the operation sequence data corresponding to the sequence ID read at Step S21. This causes an extracted data table in which change patterns are written to be generated. The individual process will be described in detail later with reference to Fig. 25.

Step S23: The CPU 201 executes a change level computation subroutine based on the extracted data table. This causes the values of an entire change level and a most frequent change level which indicate the features of an operation sequence data to be written in a feature data table in correspondence with the sequence ID read at Step S21. The individual processes will be described in detail later with reference to Fig. 26.

Step S24: The CPU 201 determines if the process was performed for all of the sequence IDs. If "Yes", the process ends. If "No", the process goes back to Step S21, and the above processes for the next sequence ID are repeated.

The above process provides the computation of the entire change level, the most frequent change level, and the difficulty level value based on a defined criterion, and the writing of the values into the feature data table 230. Therefore, the difficulty of change of neck buttons in operation sequence data is allowed to be digitized, which has never been done before, and to be displayed as a feature of the operation sequence data. The displayed entire change level, most frequent change level, and difficulty level value are computed based on the defined criterion, thereby the reliability to these values is improved. For a player, the improved reliability to the values facilitates the selection of operation sequence data which is suitable for the player's skill or taste.

(ii) Change Pattern Determination Subroutine

Fig. 25 is a flowchart showing an example of the flow of a change pattern determination subroutine performed by the game terminal device 200. The process is performed at Step S22 of the feature data generating process. The execution of the process causes the extracted pattern table illustrated in Fig. 15 to be generated in a working memory area of RAM 202 or the like.

Step S221: The CPU 201 refers to the operation sequence data table 231 corresponding to the sequence ID read at Step S21, and reads the first two entries. In the example of the operation sequence data table 231 shown in Fig. 11, the entries at times t0 and t1 are read out. The CPU 201 also creates a storage area for an extracted pattern table in the working memory area.

Step S222: The CPU 201 sets the entry at the time t0 to be a current entry, and the entry at the time t1 to be a next entry.

Step S223: The CPU 201 determines if the values of the flags R, G, and B are equal to each other between the current entry and the next entry. If all of the values are equal, the operation patterns shown by the current entry and the next entry are identical to each other, and no change of the operation pattern of the neck buttons occurs. In the case, the process goes to Step S227 which will be described later. If the values of at least one type of the flags R, G, and B are different between the current entry and the next entry, the operation patterns shown by the current entry and the next entry are different from each other. In the case, the process goes to Step S224.

Step S224: The CPU 201 extracts the values of the flags R, G, and B from the data store in the current entry and the next entry, and writes the values in the extracted pattern table.

Step S225: The CPU 201 reads out the times included in the current entry and the next entry, and writes the times in the extracted pattern table in correspondence with the data written in at Step S224.

Step S226: The CPU 201 determines if the last entry of the operation sequence data table 231 is read out or not, and if the last entry is read, the process goes back to the feature data generating process. If not, the last entry is not read out yet, the process goes to Step S227.

Step S227: The CPU 201 sets the next entry to be a current entry (current entry ← next entry). The CPU 201 further reads out a next entry from the operation sequence data table 231, which is set to be the next entry. Then, the process goes back to Step S223, where the CPU 201 again compares the current entry with the next entry to retrieve an occurrence of a change pattern, and writes the occurred change pattern in the extracted pattern table, which will be repeated.

The above process provides the extraction of the change patterns included in the operation sequence data table 231.

(iii) Change Level Computation Subroutine

Fig. 26 is a flowchart showing an example of the flow of a change level computation subroutine performed by the game terminal device 200. The process is performed at Step S23 of the feature data generating process.

Step S231: The CPU 201 retrieves the most frequent period Pm based on the extracted data table which was generated at Step S22.

Step S232: The CPU 201 refers to the change point table 232, and determines the change point of each of the change patterns written in the extracted pattern table.

Step S233: The CPU 201 refers to the coefficient table for entire period 233, and determines the coefficient which corresponds to the time period of each of the change patterns written in the extracted pattern table.

Step S234: The CPU 201 refers to the table for the most frequent change period 234, and determines the coefficient which corresponds to the time period of each of the change patterns within the most frequent period Pm, among the change patterns written in the extracted pattern table.

Step S235: The CPU 201 calculates an entire change level based on the change points obtained at Step S232 and the coefficients according to the time periods obtained at Step S233. The CPU 201 also calculates a most frequent change level based on the change points obtained at Step S232 and the coefficients according to the time periods within the most frequent period Pm which were obtained at Step S234. Furthermore, the CPU 201 writes the calculated entire change level and most frequent change level into the feature data table 230 in correspondence with the sequence ID determined at Step S21.

Step S236: The CPU 201 computes a difficulty level value based on the entire change level and most frequent change level calculated at Step S235. The computed difficulty level value is written in the feature data table 230 in correspondence with the sequence ID determined at Step S21.

The above process provides the calculation of the entire change level and most frequent change level included in feature data using the defined criterion, and the writing the calculated values into the feature data table. Also, a difficulty level value is calculated based on the entire change level and most frequent change level which were computed using the defined criterion. Then, a feature chart CH and a difficulty level value are displayed based on the written values while a game is executed, which provides an absolute index to a player for selection of a song and a level.

(5) Effects

In the present embodiment, the difficulty of each change pattern of the neck buttons R, G, and B is represented by a change point, which is stored in association with the change pattern. Based on the storage, a change level of an operation pattern of the neck buttons in operation sequence data is digitized. Moreover, the digitized change level of an operation pattern is displayed as a feature of each operation sequence data on the song selection screen. An absolute index which represents a feature of operation sequence data is provided, and so this allows a player to rely on the displayed index, and facilitates the player to select an operation sequence data suitable for the player's skill or taste.

The time period of a change of operation patterns is reflected to the change level of each operation sequence data, which enables digitations that reflect a time period of a change pattern. For example, for a shorter time period of a change pattern, a higher coefficient is used in a multiplication by a change point. This increases the sum total of the weighted change points for an operation sequence which has shorter time periods of operation patterns and includes more difficult change patterns. As a result, operation sequence data having a higher sum total value provides a fun with a higher level of changes of neck buttons. In this way, the speed of a change of operation patterns, that is the short time period of a change pattern is reflected to the change level of operation sequence data, thereby the change level a player experiences and the computation result of the change level get closer to each other.

In addition, a difficulty level of a change pattern within the most frequent period Pm is digitized, thereby the change level a player experiences and the computation result of the change level get closer to each other.

Based on the entire change level and the most frequent change level obtained using the predetermined criterion, a difficulty level value of operation sequence data is computed, thereby the criterion for difficulty level value is also defined, and such a difficulty level value is provided as one absolute index which helps a player select a song.

<Other Embodiments>

(A) Coefficient

In the first embodiment, the coefficient table for entire period 233 and the coefficient table for the most frequent change period 234 store coefficients which were set by a producer in advance, in correspondence with time periods. However, the coefficients may be obtained by computations without using the coefficient tables 233 and 234. For example, the reciprocal of the time period generated by each change pattern may be used as a coefficient.

(B) Any program for implementing the above described method on a computer and any computer-readable record medium in which the program is recorded are within the scope of the present invention. Herein, the program may be a downloadable one. The record medium includes computer-readable/writable flexible disk, a hard disk, a semiconductor memory, a CD-ROM, a DVD, a magneto-optical disc (MO), and the like.

(C) The data computation apparatus for music game may not be integrated in the game terminal device 200. For example, one of the computer terminals 160 which are connected to each other via the central server 100 and the network 300 may function as a data computation apparatus for music game. In the case, among the functional structure of the game terminal device 200, the computing function of the change determining means 212, the change computing means 213, and the difficulty level means 215, the change point table 232, the coefficient table for entire period 233, and the coefficient table for the most frequent change period 234 are provided in the computer terminal 160. Being provided with these functions, the computer terminal 160 which functions as a data computation apparatus for music game computes the entire change level, the most frequent change level, and the difficulty level value for one set of operation sequence data. Then, the computer terminal 160 uploads the computed values to the central server 100, which delivers the values to the game terminal devices 200 that are music game devices. Each of the game terminal devices 200 stores the received values in the feature data table 230, so that the above described feature chart CH can be displayed based on the values.

(D) The present invention is applicable to any game which issues instructions in accordance with music, such as a music game that in which a player operates a drum, a Japanese drum, or a key board, and a dance game in which a player steps on a foot panel to music for dancing.

Industrial Applicability

The data computation apparatus, method, and program for music game according to the present invention are applicable to any game which issues instructions to a player in accordance with music.

**Claims**

1. A data computation apparatus for music game for computing data which is used in a music game comprises:

   operation sequence storing means for storing an operation sequence in association with a song to be performed, the operation sequence setting time information of the song in correspondence with a predetermined plurality of operation members to be operated at the time information;
   change point storing means for storing a predetermined change point for each of change patterns of the operation members;
   change determining means for determining all of the change patterns of the operation members included in each operation sequence; and
   change computing means for digitizing and storing a change level of the operation members for each operation sequence based on the change patterns determined by the change determining means and the corresponding change points.

2. The data computation apparatus for music game according to claim 1, wherein
   the change computing means reads each of the change points corresponding to the change patterns of the operation members in each operation sequence out of the change point storing means, and computes the sum total of the read change points, so as to calculate a change level of the operation members of each operation sequence.

3. The data computation apparatus for music game according to claim 2, further comprises:

   entire-period coefficient storing means for storing a coefficient according to the time period at a change of the operation members, and
   the change computing means weights the change levels of operation members of each operation sequence by computing the sum total of the values which are obtained by multiplying the coefficients according to the time periods at the changes in change patterns of operation members included in each operation sequence by the change point of each change pattern.

4. The data computation apparatus for music game according to claim 1, wherein
   the change determining means further determines, in each operation sequence, the change pattern of operation members within the most frequent change period which is the period of time having the highest number of changes of operation members in a predetermined period of time, and
   the change computing means reads the change point for each change pattern of the operation members within the most frequent change period out of the change point storing means, and computes the sum total of the read change points, so as to calculate a change level of the operation members of each operation sequence.

**5.** The data computation apparatus for music game according to claim 4 further comprises:

the most frequent change period coefficient storing means for storing a coefficient according to a time period at a change of the operation members, and
the change computing means weights the change levels of operation members of each operation sequence by computing the sum total of the values which are obtained by multiplying the coefficients according to the time periods at the changes in the change patterns of the operation members in the most frequent change period by the change point of each change pattern.

**6.** The data computation apparatus for music game according to claim 1 further comprises:

difficulty level means for computing and storing a difficulty level of each operation sequence based on the sum total value of the change points of the change patterns of the operation members in each operation sequence according to claim 2 and/or the sum total value of the change points of the change patterns of the operation members within the most frequent change period in each operation sequence according claim 4.

**7.** The data computation apparatus for music game according to claim 1 further comprises:

difficulty level means for computing and storing a difficulty level of each operation sequence based on the sum total value of the weighted change points of the change patterns of the operation members in each operation sequence according to claim 3 and the sum total value of the weighted change points of the change patterns of the operation members within the most frequent change period in each operation sequence according to claim 5.

**8.** The data computation apparatus for music game according to claim 1 further comprises:

a monitor for outputting an instruction of the operation timing for the plurality of operation members based on the operation sequence; and
change displaying means for displaying a change level of the operation members digitized by the change computing means on the monitor.

**9.** A data computation program for music game executed by a computer that computes data used in a music game, and causes the computer to function as:

operation sequence storing means for storing an operation sequence in association with a song to be performed, the operation sequence setting time information of the song in correspondence with a predetermined plurality of operation members to be operated at the time information;
change point storing means for storing a predetermined change point for each change pattern of the operation members;
change determining means for determining all of the change patterns of the operation members in each operation sequence; and
change computing means for digitizing and storing a change level of the operation members for each operation sequence based on the change patterns determined by the change determining means and the corresponding change points.

**10.** A data computation method for music game which is implemented by a computer that computes data used in a music game, **characterized in that** it comprises:

an operation sequence storing step for storing an operation sequence in association with a song to be performed, the operation sequence setting time information of the song in correspondence with a predetermined plurality of operation members to be operated at the time information;
a change point storing step for storing a predetermined change point for each change pattern of the operation members;
a change determining step for determining all of the change patterns of the operation members in each operation sequence; and
a change computing step for digitizing and storing a change level of the operation members for each operation sequence based on the change patterns determined by the change determining step and the corresponding change points.

FIG. 1

**200**

**201** CPU

**202** RAM

**203** ROM

**204** NETWORK COMMUNICATION UNIT

**205** DRAWING PROCESSER

**207** SOUND PRODUCTION UNIT

**209** EXTERNAL INPUT/ OUTPUT CONTROL UNIT

**206** MONITOR

**208** SPEAKER

**210** EXTERNAL DEVICE CONTROL UNIT

**211** INPUT OPERATION UNIT

**212** CARD READER/ WRITER

**213** COIN ACCEPTOR

# FIG. 2

FIG. 3

FIG. 4

EP 2 022 549 A1

NO MORE CRYING

Fary Tales

Balance

AFTER & HARD DAY

CRACK DANCE

NO MORE CRYING

Sandogasa Ponta wa Kyou mo Iku

You'l be a man

DOKI ☆ DOKI

Wanderful Workers

Desert Rose

Say

Going up

You

NORMAL SORT

BASIC 25

ADVANCED 36

EXTREME 51

## FIG. 5

FIG. 6

EP 2 022 549 A1

EP 2 022 549 A1

STANDARD

# RESULT

**S**

NO MORE CRYING

JImmy Weckl

| BASIC | 86% |
|---|---|
| PERFECT | 234[65%] |
| GREAT | 60[20%] |
| GOOD | 33[13%] |
| POOR | 0[ 0%] |
| MISS | 13[ 2%] |
| MAXCOMBO | 234[96%] |
| SCORE | 35468269 |

| — | — |
|---|---|
| PERFECT | — |
| GREAT | — |
| GOOD | — |
| POOR | — |
| MISS | |
| MAXCOMBO | — |
| SCORE | — |

# FIG. 7

| PLAYER ID | PLAYER NAME | AUTHENTICATION INFORMATION | CARD ID | GAME SCORE |
|---|---|---|---|---|
| P0001 | Taro Yamada | yamada | C0001 | (80,60,60,30,50,50) |
| P0002 | Jiro Suzuki | suzuki | C0002 | (20,50,50,60,30,30) |
| | | jiro | C0020 | (90,80,40,25,70,90) |
| ⋮ | ⋮ | ⋮ | ⋮ | ⋮ |

FIG. 8

EP 2 022 549 A1

201

CPU

203

ROM

211 ─ GAME EXECUTING MEANS

230 ─ FEATURE DATA TABLE

231

212 ─ CHANGE DETERMINING MEANS

OPERATION SEQUENCE DATA TABLE

213 ─ CHANGE COMPUTING MEANS

CHANGE POINT TABLE ─ 232

233

214 ─ CHANGE DISPLAYING MEANS

COEFFICIENT TABLE FOR ENTIRE PERIOD

234

215 ─ DIFFICULTY LEVEL MEANS

COEFFICIENT TABLE FOR THE MOST FREQUENT CHANGE PERIOD

# FIG. 9

EP 2 022 549 A1

230

| SEQUENCE ID | ENTIRE CHANGE LEVEL | MOST FREQUENT CHANGE LEVEL | ENTIRE NUMBER OF TIMES | MOST FREQUENT NUMBER OF TIMES | RHYTHM PATTERN CHANGE | WAIILING | DIFFICULTY LEVEL |
|---|---|---|---|---|---|---|---|
| | | | | | | | |

FIG. 10

## FIG. 11

231

| TIME | R | G | B | WAILING | HEAD OF MEASURE | GAME START |
|---|---|---|---|---|---|---|
| t0 | 0 | 0 | 0 | 0 | 0 | 0 |
| t1 | 0 | 0 | 0 | 0 | 1 | 0 |
| t2 | 0 | 0 | 0 | 0 | 1 | 0 |
| t3 | 1 | 0 | 0 | 0 | 1 | 1 |
| t4 | 1 | 0 | 0 | 0 | 0 | 1 |
| t5 | 1 | 0 | 0 | 0 | 0 | 1 |
| t6 | 1 | 0 | 0 | 0 | 0 | 1 |
| t7 | 0 | 1 | 1 | 0 | 1 | 1 |
| t8 | 0 | 1 | 1 | 0 | 0 | 1 |
| t9 | 0 | 1 | 1 | 0 | 0 | 1 |
| t10 | 0 | 1 | 1 | 0 | 0 | 1 |
| t11 | 1 | 0 | 1 | 0 | 1 | 1 |
| t12 | 1 | 0 | 1 | 0 | 0 | 1 |
| t13 | 1 | 1 | 0 | 0 | 0 | 1 |
| t14 | 1 | 1 | 0 | 0 | 0 | 1 |
| t15 | 1 | 0 | 0 | 0 | 1 | 1 |
| t16 | 0 | 1 | 1 | 0 | 0 | 1 |
| t17 | 0 | 1 | 1 | 0 | 0 | 1 |
| t18 | 0 | 1 | 1 | 1 | 0 | 1 |
| t19 | 1 | 0 | 0 | 0 | 1 | 1 |
| t20 | 0 | 1 | 1 | 0 | 0 | 1 |

## FIG. 12

232

| BEFORE/ AFTER | R—— | —G— | RG— | ——B | R—B | —GB | RGB | ——— |
|---|---|---|---|---|---|---|---|---|
| R—— | 0 | 50 | 95 | 55 | 105 | 125 | 130 | 100 |
| —G— | 55 | 0 | 95 | 60 | 150 | 105 | 135 | 110 |
| RG— | 80 | 85 | 0 | 105 | 145 | 130 | 100 | 105 |
| ——B | 60 | 65 | 130 | 0 | 115 | 110 | 130 | 110 |
| R—B | 110 | 140 | 145 | 100 | 0 | 140 | 110 | 105 |
| —GB | 115 | 110 | 140 | 110 | 145 | 0 | 105 | 100 |
| RGB | 135 | 140 | 125 | 140 | 130 | 125 | 0 | 90 |
| ——— | 50 | 55 | 90 | 50 | 110 | 125 | 135 | 0 |

## FIG. 13

233

| TIME PERIOD (SEC) | ~0.5 | ~1 | ~3 | ~5 |
|---|---|---|---|---|
| COEFFICIENT | 2 | 1.5 | 1.2 | 1 |

234

| TIME PERIOD (SEC) | ~0. 2 | ~0. 4 | ~0. 8 | ~1. 2 |
|---|---|---|---|---|
| COEFFICIENT | 3 | 2 | 1. 7 | 1. 5 |

# FIG. 14

| OPERATION PATTERN BEFORE CHANGE | OPERATION PATTERN AFTER CHANGE | TIME PERIOD |
|---|---|---|
| (1,0,0) | (0,1,1) | t6, t7 |
| (0,1,1) | (1,0,1) | t10, t11 |
| (1,0,1) | (1,1,0) | t12, t13 |
| (1,1,0) | (1,0,0) | t14, t15 |
| (1,0,0) | (0,1,1) | t15, t16 |
| (0,1,1) | (1,0,0) | t18, t19 |
| (1,0,0) | (0,1,1) | t19, t20 |
| ⋮ | ⋮ | ⋮ |

# FIG. 15

## FIG. 16

$$TP = a_1 \times Pa + a_2 \times Pb + a_1 \times Pc + a_1 \times Pa + a_2 \times Pd$$
$$+ a_1 \times Pe + a_1 \times Pa + a_2 \times Pb \cdots$$

## FIG. 17

SELECT MUSIC

INFORMATION
Do P⇨G⇨G⇨P to change between Bass and Open Pick.

SHOP ???
BATTLE ???

???

45

3rd STAGE

White tornado

Trick Trap

BPM 133

AFTER & HARD DAY

CRACK DANCE

NO MORE CRYING

White tornado

You'l be a man

DOKI ☆ DOKI

Wanderful Workers

Desert Rose

Say

Going up

CUITAR   BASS   OPEN

BASIC 53

ADVANCED 53

EXTREME 97

| 1.0 | H/S | DRK | P·R | REV |
|-----|-----|-----|-----|-----|
| | C·ON | NOR | ARN | LEF |

LW

ENTIRE CHANGE LEVEL

MOST FREQUENT CHANGE LEVEL

ENTIRE NUMBER OF TIMES

DF

CH

WAILING

MOST FREQUENT NUMBER OF TIMES

RHYTHM PATTERN CHANGE

CREDIT   0      COIN      0/2

FIG. 18

EP 2 022 549 A1

## SELECT MUSIC

INFORMATION
Hold [G] and Effector Knob
to change songlist order.

SHOP ???
BATTLE ???
???

3rd STAGE

# White tornado

Trick Trap

BPM 133

| AFTER & HARD DAY |
| CRACK DANCE |
| NO MORE CRYING |
| White tornado |
| You'l be a man |
| DOKI ☆ DOKI |
| Wanderful Workers |
| Desert Rose |
| Say |
| Going up |

CUITAR   BASS   OPEN

BASIC 53

ADVANCED 53

EXTREME 97

| 1.0 | H/S | DRK | P·R | REV |
| | C·ON | NOR | ARN | LEF |

LW

ENTIRE
CHANGE
MOST         LEVEL      ENTIRE
FREQUENT                NUMBER
CHANGE                  OF TIMES
LEVEL

DF                 CH

WAILING          MOST FREQUENT
                 NUMBER OF TIMES
RHYTHM PATTERN
   CHANGE

CREDIT     0          COIN     0/2

FIG. 19

EP 2 022 549 A1

**FIG. 20**

SELECT MUSIC

INFORMATION
Do [G] ⇨ [G] ⇨ [P] to change
sequence speed.

SHOP      ???
BATTLE    ???
          ???

3rd STAGE

White tornado

Trick Trap

BPM 133

AFTER & HARD DAY

CRACK DANCE

NO MORE CRYING

White tornado

You'l be a man

DOKI ☆ DOKI

Wanderful Workers

Desert Rose

Say

Going up

CUITAR   BASS   OPEN

BASIC 53

ADVANCED 53

LW

EXTREME 97

| 1.0 | H/S | DRK | P·R | REV |
| C·ON | NOR | ARN | LEF |

MOST FREQUENT CHANGE LEVEL

ENTIRE CHANGE LEVEL

ENTIRE NUMBER OF TIMES

DF — CH

WAILING

MOST FREQUENT NUMBER OF TIMES

RHYTHM PATTERN CHANGE

CREDIT   0   COIN   0/2

# SELECT MUSIC

INFORMATION
Hold [G] button and do [P]⇨[P]
to change difficulty of music score.

SHOP ???
BATTLE ???

???

**45**

3rd STAGE

AFTER & HARD DAY

CRACK DANCE

NO MORE CRYING

Mutsuhiko Izumi
## DAY DREAM

BPM 80–300

DAY DREAM

You'l be a man

DOKI ☆ DOKI

CUITAR  BASS  OPEN

Wanderful Workers

BASIC **87**

ADVANCED **94**

Desert Rose

Say

EXTREME **99**

| 1.0 | H/S | DRK | P·R | REV |
|-----|-----|-----|-----|-----|
|     | C·ON | NOR | ARN | LEF |

Going up

ENTIRE
CHANGE
LEVEL

MOST
FREQUENT
CHANGE
LEVEL

ENTIRE
NUMBER
OF TIMES

DF

CH

WAILING

MOST FREQUENT
NUMBER OF TIMES

RHYTHM PATTERN
CHANGE

LW

CREDIT    0    COIN    0/2

FIG. 21

FIG. 22

EP 2 022 549 A1

```
                    ( START )
                         │
    ┌────────────────────┤
    │                    ▼
    │         S1   ┌──────────────┐
    │              │   DISPLAY    │
    │              │ DEMONSTRATION│
    │              │    SCREEN    │
    │              └──────────────┘
    │                    │
    │              S2     ▼
    │       No   ╱─────────────────╲
    │◄──────────   CARD IS INSERTED?
    │            ╲─────────────────╱
    │                    │ Yes
    │              S3     ▼
    │              ┌──────────────┐
    │              │  READ CARD   │
    │              └──────────────┘
    │                    │
    │              S4     ▼
    │              ┌──────────────┐
    │              │  DOWNLOAD    │
    │              │INDIVIDUAL DATA│
    │              └──────────────┘
    │       ┌─────────►  │
    │       │      S5     ▼
    │       │      ┌──────────────┐
    │       │      │DISPLAY SELECTION│
    │       │      │    SCREEN    │
    │       │      └──────────────┘
    │       │      S6     ▼ ◄──────────┐
    │       │         ╱─────────╲  No  │
    │       │           SELECTED? ─────┘
    │       │         ╲─────────╱
    │       │      ┌──────►│ Yes
    │       │      S7     ▼
    │       │      ┌──────────────┐
    │       │      │ EXECUTE GAME │
    │       │      └──────────────┘
    │       │  No  S8     ▼
    │       │  ╱─────────────────╲
    │       └──   GAME ENDS?
    │          ╲─────────────────╱
    │                    │ Yes
    │              S9     ▼
    │              ┌──────────────┐
    │              │DISPLAY RESULTS│
    │              └──────────────┘
    │        Yes  S10    ▼
    │       ┌───╱─────────────╲
    │       └───   CONTINUE?
    │           ╲─────────────╱
    │                    │ No
    └────────────────────┘
```

# FIG. 23

START

S21 | DETERMINE SEQUENCE ID

S22 | CHANGE PATTERN DETERMINATION SUBROUTINE

S23 | CHANGE LEVEL COMPUTATION SUBROUTINE

S24 | ALL OF SEQUENCE IDS?  No

Yes

END

FIG. 24

CHANGE PATTERN
DETERMINATION SUBROUTINE

S221 READ ENTRIES AT t0 AND t1

S222 CURRENT ENTRY ← ENTRY AT t0
NEXT ENTRY ← ENTRY AT t1

S223 ALL OF FLAGS R, G,
AND B ARE EQUAL? — Yes

No

S224 STORE VALUES OF R, G, AND B OF
CURRENT ENTRY AND NEXT ENTRY

S225 STORE TIME PERIODS OF CURRENT
ENTRY AND NEXT ENTRY

S226 ANOTHER ENTRY?

No

Yes

S227 CURRENT ENTRY ← NEXT ENTRY
READ NEXT NEW ENTRY

RETURN

FIG. 25

```
        ┌─────────────────────────────────┐
        │       CHANGE LEVEL              │
        │  COMPUTATION SUBROUTINE         │
        └─────────────────────────────────┘
                        │
                        ▼
        ┌─────────────────────────────────┐
   S231 │    COMPUTE MOST FREQUENT        │
        │         PERIOD Pm               │
        └─────────────────────────────────┘
                        │
                        ▼
        ┌─────────────────────────────────┐
   S232 │   READ CHANGE POINTS OF ALL     │
        │      CHANGE PATTERNS            │
        └─────────────────────────────────┘
                        │
                        ▼
        ┌─────────────────────────────────┐
   S233 │    READ COEFFICIENTS OF ALL     │
        │      CHANGE PATTERNS            │
        └─────────────────────────────────┘
                        │
                        ▼
        ┌─────────────────────────────────┐
        │   READ COEFFICIENTS OF EACH     │
   S234 │   CHANGE PATTERN WITHIN         │
        │   MOST FREQUENT PERIOD Pm       │
        └─────────────────────────────────┘
                        │
                        ▼
        ┌─────────────────────────────────┐
        │  COMPUTE AND WRITE ENTIRE       │
   S235 │  CHANGE LEVEL AND MOST          │
        │  FREQUENT CHANGE LEVEL          │
        └─────────────────────────────────┘
                        │
                        ▼
        ┌─────────────────────────────────┐
   S236 │   COMPUTE AND WRITE             │
        │   DIFFICULTY LEVEL             │
        └─────────────────────────────────┘
                        │
                        ▼
              (  RETURN  )
```

# FIG. 26

| **INTERNATIONAL SEARCH REPORT** | International application No. |
|---|---|
| | PCT/JP2007/052812 |

**A. CLASSIFICATION OF SUBJECT MATTER**
*A63F13/00*(2006.01)i

According to International Patent Classification (IPC) or to both national classification and IPC

**B. FIELDS SEARCHED**

Minimum documentation searched (classification system followed by classification symbols)
A63F9/24, A63F13/00-13/12, G09B11/00-15/08, G10H1/00-7/00

Documentation searched other than minimum documentation to the extent that such documents are included in the fields searched

| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2003-150154 A (Yamaha Corp.),<br>23 May, 2003 (23.05.03),<br>Par. Nos. [0001] to [0042]; Figs. 1 to 7 | 1-3,6,8-10<br>4-5,7 |
| Y<br>A | JP 2006-78656 A (Casio Computer Co., Ltd.),<br>23 March, 2006 (23.03.06),<br>Par. Nos. [0001] to [0136]; Figs. 1 to 21 | 1-3,6,8-10<br>4-5,7 |
| A | JP 2001-331173 A (Casio Computer Co., Ltd.),<br>30 November, 2001 (30.11.01),<br>Par. Nos. [0040] to [0343]; Figs. 1 to 52 | 1-10 |
| A | JP 2002-182642 A (Casio Computer Co., Ltd.),<br>26 June, 2002 (26.06.02),<br>Par. Nos. [0011] to [0040]; Figs. 1 to 15 | 1-10 |

| ☒ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>18 April, 2007 (18.04.07) | Date of mailing of the international search report<br>01 May, 2007 (01.05.07) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2007/052812 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2003-290543 A  (Konami Co., Ltd.),<br>14 October, 2003 (14.10.03),<br>Par. Nos. [0015] to [0058]; Figs. 1 to 8 | 1-10 |
| A | JP 2004-205791 A  (Casio Computer Co., Ltd.),<br>22 July, 2004 (22.07.04),<br>Par. Nos. [0012] to [0072]; Figs. 1 to 18 | 1-10 |
| A | JP 2001-170354 A  (Konami Co., Ltd.),<br>26 June, 2001 (26.06.01),<br>Par. Nos. [0012] to [0059]; Figs. 1 to 12 | 1-10 |
| A | JP 8-305356 A  (Yamaha Corp.),<br>22 November, 1996 (22.11.96),<br>Par. Nos. [0014] to [0065]; Figs. 1 to 9 | 1-10 |
| A | JP 2004-329792 A  (Nintendo Co., Ltd.),<br>25 November, 2004 (25.11.04),<br>Par. Nos. [0044] to [0158]; Figs. 1 to 28 | 1-10 |

Form PCT/ISA/210 (continuation of second sheet) (April 2005)

| INTERNATIONAL SEARCH REPORT<br>Information on patent family members | International application No.<br>PCT/JP2007/052812 |
|---|---|

| JP 2003-150154 A | 2003.05.23 | (Family: none) |
|---|---|---|
| JP 2006-78656 A | 2006.03.23 | (Family: none) |
| JP 2001-331173 A | 2001.11.30 | (Family: none) |
| JP 2002-182642 A | 2002.06.26 | (Family: none) |
| JP 2003-290543 A | 2003.10.14 | HK 1051464 A2<br>TW 583009 B |
| JP 2004-205791 A | 2004.07.22 | (Family: none) |
| JP 2001-170354 A | 2001.06.26 | HK 1039023 A2 |
| JP 8-305356 A | 1996.11.22 | JP 2000-214762 A<br>JP 3672178 B<br>JP 3672179 B<br>JP 3827274 B |
| JP 2004-329792 A | 2004.11.25 | US 2004/0229689 A1 |

Form PCT/ISA/210 (patent family annex) (April 2005)